# EUROPEAN PATENT APPLICATION

(11) **EP 4 354 425 A1**
(43) Date of publication of application: **17.04.2024**
(21) Application number: 21945559.9
(22) Date of filing: 18.06.2021
(51) Int. Cl.: G10L 15/01, H04L 51/10

(54) **PROCESSING METHOD, TERMINAL DEVICE, AND STORAGE MEDIUM**

(71) Applicant: Shenzhen Transsion Holdings Co., Ltd., Shenzhen, Guangdong 518057 (CN)
(72) Inventor: SHEN, Jianfeng, Shenzhen, Guangdong 518057 (CN); WANG, Zhiyong, Shenzhen, Guangdong 518057 (CN); LI, Chenxiong, Shenzhen, Guangdong 518057 (CN)
(74) Representative: Osterhoff, Utz
(86) International application number: PCT/CN2021/101065
(87) International publication number: WO 2022/261976

(57) **Abstract**

The present application relates to a processing method, a device and a storage medium. The processing method is applied to a processing device, including following steps: in response to at least one first response result not meeting the first preset condition; obtaining at least one second response result; and preprocessing at least one first response result and at least one second response result. In the present application, after obtaining the response result, the first response result and the second response result are preprocessed. After obtaining the response result, the accuracy and/or interaction effect of the response result can be improved, thereby improving the user experience.

## Description

### TECHNICAL FIELD

The present application relates to the technical field of communication, and in particular to a processing method, a device and a storage medium.

### BACKGROUND

With the development of artificial intelligence and speech recognition technology, most devices (such as mobile phones, headphones, cars or TVs, etc.) usually have at least two or more human-computer interaction applications (such as voice assistants), and/or, there are two or more human-computer interaction applications between different devices. The foregoing description is intended to provide general background information and does not necessarily constitute prior art.

### SUMMARY

### TECHNICAL PROBLEM

During the process of conceiving and implementing the present application, the inventor discovered that there are at least the following problems: in some implementations, different human-computer interaction applications work independently, after human-computer interaction applications process information, data security cannot be effectively controlled, and it is even impossible to fully utilize the functions and interactive capabilities of different human-computer interaction applications, causing data security issues, or the interaction effect is poor, affecting the user experience.

For example, when using a certain human-computer interaction application, it is limited to the response result of the certain human-computer interaction application, and the application scenes are limited. Or, any human-computer interaction application downloaded by the user can directly output the device's contact information and other private data, which may lead to the leakage of private data.

### TECHNICAL SOLUTION

In view of the above technical problems, the present application provides a processing method, a device and a storage medium. After obtaining the information to be processed, the first target application or target service and/or the second target application or target service are processed, such that when using the application or service, the accuracy of response result and/or interaction effect can be improved, thereby improving user experience.

In order to solve the above technical problems, the present application provides a processing method, applied to a processing device, including:
step S1, in response to at least one first response result not meeting a first preset condition;
step S2, obtaining at least one second response result; and
step S3, preprocessing the at least one first response result and the at least one second response result.

In an embodiment, the first response result is processed and/or output by at least one first target application or target service. In an embodiment, the first target application or target service is located in the first device;
the second response result is processed and/or output by at least one second target application or target service. In an embodiment, the second target application or target service is located in the second device.

In an embodiment, the step S1 includes:
step S11, in response to information to be processed, outputting a first processing request, so that the first target application or target service obtains the first response result based on the first processing request;
step S12, in response to the first response result not meeting the first preset condition, and/or a first operation meeting a second preset condition, and/or, the processing device meeting a third preset condition, outputting a second processing request, so that the second target application or target service obtains the second response result. In an embodiment, the second processing request is obtained based on the information to be processed and/or the first response result.

In an embodiment, in the step S1 and/or the step S12, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

In an embodiment, in the step S12, the first operation meeting the second preset condition includes at least one of the following:
the first operation is to confirm at least one first data information;
the first operation is to enter the preset application and/or service;
the first operation is to operate the preset function button;
the first operation is a preset gesture and/or a preset key operation;
the first operation is a preset voice instruction;
the first operation is a timeout and no response prompt information;
the first operation is an operation at a preset position and/or a preset time period.

In an embodiment, in the step S12, the processing device meeting the third preset condition includes at least one of the following:
an account for logging in to the processing device is a preset account;
the processing device is in a preset mode or scene;
the processing device has preset functions;
a state of the processing device application meets a preset state;
a permission of the processing device meet a preset permission;
a power of the processing device meets a preset power;
a network state of the processing device meets a preset network state.

In an embodiment, the step S3 includes:
step S31, processing the at least one first response result and the at least one second response result according to a preset processing strategy; and/or
step S32, outputting the at least one first response result and the at least one second response result according to a preset output strategy.

In an embodiment, the first preset processing strategy and/or the second preset processing strategy includes at least one of the following:
transmitting through a preset transmission path;
processing through a preset device;
processing through a preset target application or target service;
outputting through a preset device;
outputting through a preset scene;
processing or outputting in the preset scene.

In an embodiment, the step S31 includes:
processing the first response result according to a first preset processing strategy; and/or
processing the second response result according to a second preset processing strategy.

In an embodiment, the first preset processing strategy is the same as or different from the second preset processing strategy.

In an embodiment, the step S3 includes:
detecting whether the second response result meets a fourth preset condition, and/or whether the processing device meets a fifth preset condition,
in response to the second response result not meeting the fourth preset condition and the processing device not meeting the fifth preset condition, proceeding to step S31, and/or in response to the second response result meeting the fourth preset condition or the processing device meeting the fifth preset condition, proceeding to step S32.

In an embodiment, the second response result not meeting the fourth preset condition includes, but is not limited to, at least one of the following:
the second response result not matching the second processing request;
the second response result not matching the information to be processed;
the second response result not matching the processing device;
the second target application or target service corresponding to the second response result not matching the information to be processed and/or the processing device;
the device that obtains and/or outputs the second response result not matching the information to be processed and/or the processing device.

In an embodiment, the step S31 includes:
step S31a, outputting the first response result and/or the second response result to at least one associated device, and/or receiving a third response result output by the associated device; or
step S31b, determining or generating at least one third response result, and/or outputting the third response result to at least one associated device.

In an embodiment, before the step S31a or the step S31b, the method further includes: determining at least one associated device according to the first response result and/or the second response result and/or the information to be processed and/or the operation information, and/or the scene in which the processing device is located.

In an embodiment, in the step S31b, the determining or generating at least one third response result includes:
in response to obtaining a second operation, processing the first response result and/or the second response result; and/or
obtaining a processing result of a third target application or target service based on the first response result and/or the second response result. In an embodiment, the third target application or target service is located in the processing device.

In an embodiment, the second operation includes at least one of the following:
confirming at least one second piece of data;
entering a preset application and/or service;
operating a preset function button;
a preset gesture and/or a preset key operation;
a preset voice instruction;
timeout and no response prompt information.

In an embodiment, the step S3 includes: outputting the response result to be output according to a preset output strategy.

In an embodiment, the preset output strategy includes at least one of the following:
selecting at least one response result to be output according to an information selection strategy;
selecting at least one output device according to a device selection strategy;
selecting at least one response result to be output and/or an output sequence of at least one output device according to a sequence selection strategy;
output form and/or output time and/or output scene.

In an embodiment, the selecting at least one response result to be output according to the information selection strategy includes:
obtaining a privacy level of the response result according to a keyword in the response result, and/or obtaining a type of the response result according to a format of the response result, and/or, obtaining a matching level of the response result and/or a network score of the response result according to a matching degree between the response result and the information to be processed;
selecting the information to be output according to the scene in which the user is located and/or the scene in which the device to be output is located.

In an embodiment, the selecting at least one response result to be output and/or the output sequence of at least one output device according to the sequence selection strategy includes:
selecting at least one response result to be output and/or an output sequence of at least one output device according to the attributes of at least one response result to be output and/or the content of at least one response result to be output and/or the scene in which the processing device is located.

The present application further provides a processing method, applied to a processing device, including:
step S10, obtaining at least one first response result and/or at least one second response result; and
step S20, detecting whether the first response result and/or the second response result meets a preset condition, in response to the first response result and/or the second response result not meeting the preset condition, processing the first response result and/or the second response result according to a preset processing strategy; and/or in response to the first response result and/or the second response result meeting the preset condition, outputting the first response result and/or the second response result according to a preset output strategy.

In an embodiment, the first response result is processed and/or output by at least one first target application or target service. In an embodiment, the first target application or target service is located in the first device.

The second response result is processed and/or output by at least one second target application or target service. In an embodiment, the second target application or target service is located in the second device.

In an embodiment, the step S10 includes:
step S101, in response to information to be processed, outputting a first processing request to the first target application or target service and the second target application or target service; and
step S102, receiving a first response result output by the first target application or target service, and/or receiving a second response result output by the second target application or target service.

In an embodiment, the step S10 includes:
in response to the information to be processed, outputting the first processing request so that the first target application or target service obtains the first response result based on the first processing request; and
in response to at least one first response result not meeting the first preset condition, and/or the first operation meeting the second preset condition, and/or the processing device meeting the third preset condition, outputting a second processing request, so that the second target application or target service obtains the second response result.

In an embodiment, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

In an embodiment, the first operation meeting the second preset condition includes at least one of the following:
the first operation is to confirm at least one first data information;
the first operation is to enter the preset application and/or service;
the first operation is to operate the preset function button;
the first operation is a preset gesture and/or a preset key operation;
the first operation is the preset voice instruction;
the first operation is a timeout and no response prompt information;
the first operation is an operation at a preset position and/or a preset time period.

In an embodiment, the processing device meeting the third preset condition includes at least one of the following:
an account for logging in to the processing device is a preset account;
the processing device is in a preset mode or scene;
the processing device has preset functions;
a state of the processing device application meets a preset state;
a permission of the processing device meet a preset permission;
a power of the processing device meets a preset power;
a network state of the processing device meets a preset network state.

In an embodiment, the outputting the second processing request includes:
determining key information in response to the second processing request; and
determining the second target application or target service according to the key information, and the second target application or target service is caused to respond based on the key information.

In an embodiment, the step S20 includes:
detecting whether the first response result meets a preset condition;
if the first response result meets the preset condition, outputting the first response result according to the preset output strategy; and/or
if the first response result does not meet the preset condition, detecting whether the second response result meets the preset condition, if the second response result meets the preset condition, outputting the second response result according to the preset output strategy; and/or, if the second response result does not meet the preset condition, processing according to the preset processing strategy.

In an embodiment, processing according to the preset processing strategy includes:
outputting prompt information, and in response to the first operation, processing the first response result and/or the second response result according to a preset processing strategy; and/or
outputting the processing request to the associated device so that the associated device performs preset processing; and/or
receiving or generating or determining at least one third response result.

In an embodiment, the receiving or generating or determining at least the third response result includes:
outputting the first response result and/or the second response result to at least one associated device, and/or receiving a third response result output by the associated device; or
determining or generating at least one third response result, and/or outputting the third response result to at least one associated device.

In an embodiment, the determining or generating at least one third response result includes:
in response to obtaining the second operation, processing the first response result and/or the second response result; and/or
obtaining the processing result of a third target application or target service based on the first response result and/or the second response result. In an embodiment, the third target application or target service is located in the processing device.

In an embodiment, the operation S20 includes:
detecting whether the first response result meets the first preset condition;
if the first response result meets the first preset condition, detecting whether the second response result meets the second preset condition;
if the second response result meets the second preset condition, outputting the first response result and the second response result according to the preset output strategy; and/or if the second response result does not meet the second preset condition, outputting the second processing request to at least one associated device, so that the associated device outputs a third response result, in response to the third response result meeting the second preset condition, outputting the first response result and the third response result according to the preset output strategy.

In an embodiment, in the step S20, the preset output strategy includes at least one of the following:
selecting at least one response result to be output according to an information selection strategy;
selecting at least one output device according to a device selection strategy;
selecting at least one response result to be output and/or an output sequence of at least one output device according to a sequence selection strategy;
output form and/or output time and/or output scene.

In an embodiment, the selecting at least one response result to be output and/or the output sequence of at least one output device according to the sequence selection strategy includes:
selecting the at least one response result to be output and/or the output sequence of the at least one output device according to an attribute of the at least one response result to be output and/or a content of the at least one response result to be output and/or a scene in which the processing device is located.

The present application further provides a processing method, applied to a processing device, including:
step S100, in response to at least one first response result not meeting a first preset condition, and/or at least one second response result not meeting a second preset condition;
step S200, in response to an acquired operation meeting a third preset condition, and/or the processing device meeting a fourth preset condition; and
step S300, outputting at least one processing request so that at least one associated device performs preset processing.

In an embodiment, the step S100 includes:
in response to the at least one first response result not meeting the first preset condition, detecting whether the at least one second response result meets the second preset condition;
in response to the at least one second response result not meeting the second preset condition, outputting first prompt information, and/or proceeding to step S200; and/or, in response to the at least one second response result meeting the second preset condition, processing the second response result according to the preset processing strategy and then output, or outputting the second response result according to the output strategy.

In an embodiment, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

In an embodiment, the second response result not meeting the second preset condition includes at least one of the following:
the second response result not matching the second processing request;
the second response result not matching the information to be processed;
the second response result not matching the processing device;
the second target application or target service corresponding to the second response result not matching the information to be processed and/or the processing device;
the device that obtains and/or outputs the second response result not matching the information to be processed and/or the processing device.

In an embodiment, the step S300 includes:
step S3001a, outputting the first response result and/or the second response result to at least one associated device, and/or receiving a third response result output by the associated device; or
step S3001b, receiving or determining or generating at least one third response result, and outputting the third response result to at least one associated device, so that the associated device performs preset processing on the third response result; or
step S3001c, outputting information to be processed to the associated device.

In an embodiment, in the step S3001b, the determining or generating the at least one third response result includes:
in response to an acquired operation, processing the first response result and/or the second response result; and/or
obtaining a processing result of a third target application or target service based on the first response result and/or the second response result. In an embodiment, the third target application or target service is located in the processing device.

In an embodiment, the processing method further includes:
detecting whether there is at least one associated device in the processing device; and
when there is the at least one associated device in the processing device, performing the step S300, and/or when there isn't the at least one associated device in the processing device, performing no processing or outputting second prompt information.

The present application further provides a processing method, applied to a processing device, including:
step S1000, in response to at least one first response result of a first target application or target service, and/or at least one second response result of a second target application or target service; and
step S2000, outputting a third response result, the third response result being obtained through processing the first response result and/or the second response result by an associated device.

In an embodiment, at least one first response result is obtained and/or output by at least one first target application or target service, and at least one second response result is obtained and/or output by at least one second target application or target service, and at least one third response result is processed and/or output by at least one third target application or target service. The first target application or target service may be located in the first device, and the second target application or target service may be located in the second device. Or, at least one of the first target application or target service and the second target application or target service may also be located in the processing device.

In an embodiment, the step S1000 includes:
in response to information to be processed, outputting a first processing request to the first target application or target service, and/or the second target application or target service; and
receiving a first response result output by the first target application or target service, and/or receiving a second response result output by the second target application or target service.

In an embodiment, the step S1000 includes:
in response to information to be processed, outputting a first processing request so that the first target application or target service obtains a first response result based on the first processing request; and
in response to the at least one first response result not meeting a first preset condition, and/or a first operation meeting a second preset condition, and/or, the processing device meeting a third preset condition, outputting a second processing request, so that the second target application or target service obtains the second response result.

In an embodiment, the step S1000 includes:
in response to the at least one first response result not meeting a first preset condition, detecting whether the at least one second response result meets a second preset condition;
in response to the at least one second response result not meeting the second preset condition, outputting first prompt information, and/or proceeding to the step S2000; and/or
in response to the at least one second response result meeting the second preset condition, processing the second response result according to a preset processing strategy and outputting the second response result, or outputting the second response result according to an output strategy.

In an embodiment, before the step S2000, the method includes:
determining at least one associated device according to the first response result and/or the second response result and/or information to be processed and/or operation information and/or a scene in which the processing device is located.

In an embodiment, in the step S2000, the third response result being obtained through processing the first response result and/or the second response result by the associated device includes at least one of the following:
in response to the editing operation, the associated device obtains the third response result after processing the first response result and/or the second response result;
in response to the processing request, the associated device wakes up or runs a third target application or target service, and processes the first response result and/or the second response result to obtain the third response result;
in response to the preset operation, the associated device outputs the first response result and/or the second response result to the intermediate device, and/or receives the third response result output by the intermediate device.

In an embodiment, the step S2000 includes:
detecting whether the third response result meets a preset output condition;
in response to that the third response result meets the preset output condition, outputting the third response result; and/or
in response to that the third response result does not meet the preset output condition, preprocessing the third response result.

In an embodiment, the preset output condition includes at least one of the following:
the third response result matching the content of the information to be processed;
the third response result matching the function of the processing device, and/or the currently running application, and/or the permission level;
the third response result matching the preset scene.

In an embodiment, the preset processing includes at least one of the following:
outputting after processing;
outputting prompt information and outputting according to the selection operation;
processing and/or outputting based on control information from other devices.

The associated device mentioned in the present application may refer to any device directly or indirectly connected to the processing device, may also refer to a device that has and/or is logged in at least one same user account as the processing device, may also refer to at least one other device selected or preset by the user or determined based on user habits or big data analysis, and may also be determined in other ways, such as the examples given in the embodiments of the present application.

The present application further provides a device, including a memory and a processor. The memory stores a processing program, and when the processing program is executed by the processor, the steps of any of the above processing methods are implemented.

The present application further provides a readable storage medium. A computer program is stored on the readable storage medium, and when the computer program is executed by a processor, the steps of any of the above processing methods are implemented.

As described above, the present application provides a processing method, a device, and a storage medium. The method includes: in response to at least one first response result not meeting the first preset condition; obtaining at least one second response result; and preprocessing at least one first response result and at least one second response result. In the present application, after obtaining the response result, detecting and processing the response result can improve the accuracy and/or interaction effect of the output response result, and improve the user experience. In another way, the first response result and/or the second response result are processed by the associated device. Based on the functions and control capabilities of multiple devices, the accuracy of response results and/or interactive effects can be improved, thereby improving the user experience.

### BENEFICIAL EFFECT

The processing method, the terminal device and the storage medium of the present application can detect and process the response results, which can improve the accuracy and/or interaction effect of the output response results and improve the user experience. In another way, the first response result and/or the second response result are processed by the associated device. Based on the functions and control capabilities of multiple devices, the accuracy of response results and/or interactive effects can be improved, thereby improving the user experience.

### BRIEF DESCRIPTION OF THE DRAWINGS

The accompanying drawings, which are incorporated in and constitute a part of this specification, illustrate embodiments consistent with the present application and together with the description serve to explain the principles of the present application. In order to explain the technical solutions of the embodiments of the present application more clearly, the drawings needed to be used in the description of the embodiments will be briefly introduced below. Apparently, those skilled in the art can also obtain other drawings based on these drawings without any creative effort.
FIG. 1 is a schematic diagram of the hardware structure of a mobile terminal that implements various embodiments of the present application.
FIG. 2 is an architecture diagram of a communication network system according to an embodiment of the present application.
FIG. 3 is a schematic flowchart of a processing method according to a first embodiment.
FIG. 4 is a schematic interface diagram of a processing device in a scene according to the first embodiment.
FIG. 5 is a schematic interface diagram of a processing device in another scene according to the first embodiment.
FIG. 6 is a schematic interface diagram of a processing device in yet another scene according to the first embodiment.
FIG. 7 is a schematic flowchart of a processing method according to a second embodiment.
FIG. 8 is a schematic flowchart of a processing method according to a third embodiment.
FIG. 9 is a schematic flowchart of a processing method according to a fourth embodiment.
FIG. 10 is a schematic flowchart of a processing method according to a fifth embodiment.
FIG. 11 is a schematic flowchart of a processing method according to a sixth embodiment.

The realization of the purpose, functional features and advantages of the present application will be further described with reference to the embodiments and the accompanying drawings. Through the above-mentioned drawings, clear embodiments of the present application have been shown, which will be described in more detail below. These drawings and text descriptions are not intended to limit the scope of the present application's concepts in any way, but are intended to illustrate the application's concepts for those skilled in the art with reference to specific embodiments.

### DETAILED DESCRIPTION OF THE EMBODIMENTS

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the present application. Rather, they are merely examples of devices and methods consistent with aspects of the present application as recited in the appended claims.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S1 and S2 are used for the purpose of expressing the corresponding content more clearly and concisely, and do not constitute a substantive limitation on the order. Those skilled in the art may perform S2 first and then S1 etc. during specific implementation, but these should all be within the protection scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The mobile terminal can be implemented in various forms. For example, the mobile terminal described in the present application can include a mobile phone, a tablet computer, a notepad computer, a hand-held computer, a personal digital assistants (PDA), a portable media player (PMP), a navigation device, a wearable device, a smart bracelet, a pedometer and other mobile terminals, as well as a fixed terminal such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal.

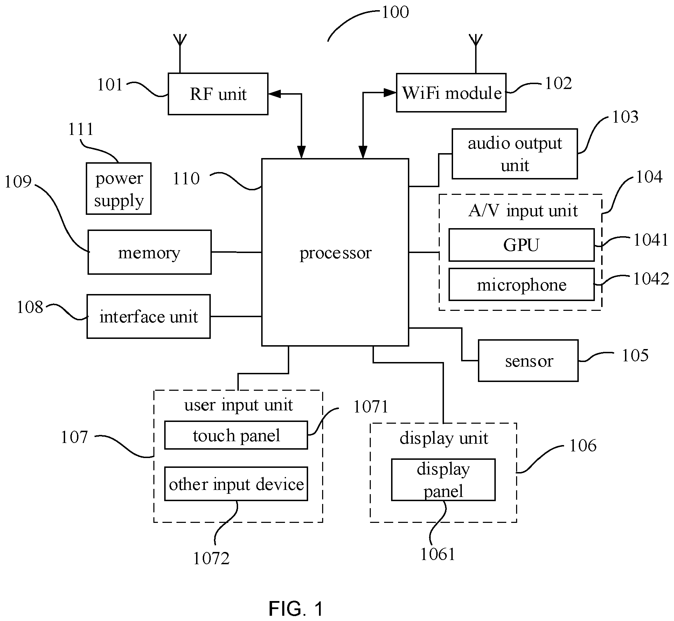

As shown in FIG. 1, FIG. 1 is a schematic structural diagram of a hardware of a mobile terminal according to embodiments of the present application. The mobile terminal 100 can include a Radio Frequency (RF) unit 101, a WiFi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switching, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated herein.

In order to facilitate the understanding of the embodiments of the present application, the following describes the communication network system on which the mobile terminal of the present application is based.

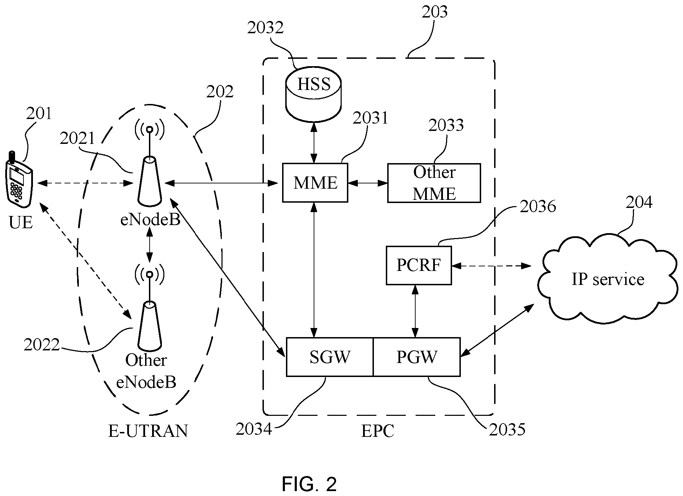

As shown in FIG. 2, FIG. 2 is an architecture diagram of a communication network system according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

In an embodiment, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, and new network systems in the future, or the like, which is not limited herein.

Based on the above mobile terminal hardware structure and communication network system, various embodiments of the present application are proposed.

### First embodiment

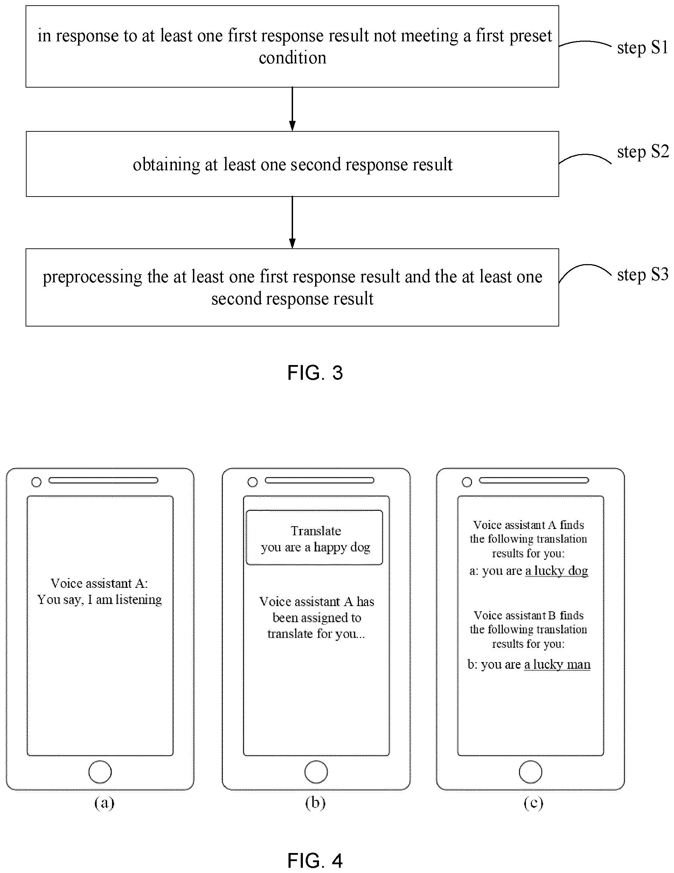

FIG. 3 is a schematic flowchart of a processing method according to the first embodiment. As shown in FIG. 3, a processing method of the present application is applied to a processing device, including:
step S1, in response to at least one first response result not meeting a first preset condition;
step S2, obtaining at least one second response result; and
step S3, preprocessing the at least one first response result and the at least one second response result.

In an embodiment, the first response result is obtained by processing and/or output by at least one first target application or target service, and the second response result is obtained by processing and/or output by at least one second target application or target service. The first target application or target service may be located in the first device, and the second target application or target service may be located in the second device. Or, at least one of the first target application or target service and the second target application or target service may also be located in the processing device. In an embodiment, at least one of the processing device, the first device, and the second device may include a terminal device (such as a mobile phone, a tablet, etc.), a wearable smart device (such as a smart watch, a smart bracelet, a smart headset, etc.), a smart home device (such as a smart TV, a smart speaker, etc.), an Internet of Vehicles device (such as a smart car, a vehicle-mounted terminal, etc.). The applications or services may include human-computer interaction applications, and the human-computer interaction applications include applications or services that enable human-computer interaction through touch operations, gestures, voice, air gestures, or the like. In an embodiment, the first target application or target service and/or the second target application or target service includes at least one of a voice assistant application, a social media application, an information content application, a tool application, and a system service.

Through the above manner, in response to the first response result not meeting the first preset condition, at least one second response result is obtained, and the first response result and the second response result are preset processed, when the first response result and the second response result are obtained, the response results can be processed again, making full use of different response results, improving the accuracy and/or interaction effect of the response results, and improving the user experience.

Exemplary, when the acquired response result does not meet the first preset condition, for system-level human-computer interaction applications or security levels, and/or functions supported by human-computer interaction applications with higher trust levels, priority is given to calling system-level human-computer interaction applications or security levels, and/or, for human-computer interaction applications with higher trust levels, the second response results with higher security levels and/or trust levels and/or higher matching degrees are obtained; and/or, for human-computer interaction applications with complementary functions, multiple response results can be fused, replaced, and output after processing; and/or the response results are displayed according to specific scenes, such as displaying the response results in the form of graphics and text at a specific time period, displaying the response results in the form of voice broadcasts at a specific location, or the like. In this way, it is possible to make full use of the functions and interaction capabilities of the application or service and perform preset processing on multiple response results, which can not only improve the accuracy of the response results, but also improve the interaction effect. This makes the interaction scene not limited to the currently obtained response results and/or the current device, making the interaction more flexible and smooth, and improving the user experience.

In an embodiment, the step S1 may include:
step S11, in response to information to be processed, outputting a first processing request, so that the first target application or target service obtains the first response result based on the first processing request;
step S12, in response to the first response result not meeting the first preset condition, and/or a first operation meeting a second preset condition, and/or, the processing device meeting a third preset condition, outputting a second processing request, so that the second target application or target service obtains the second response result.

In an embodiment, the first information to be processed and/or the second information to be processed include but are not limited to voice information, gesture information, body movements and other information or information after processing these information, for example, which can be a control instruction obtained after processing voice information. The second processing request may be the same as the first processing request, or may be complementary to the first processing request based on the same information to be processed, or may also be obtained based on two mutually related information to be processed. In an embodiment, the second processing request may also be obtained by processing the first response result based on the information to be processed. For example, when the information to be processed is content to be translated and includes a first language and a second language, the first processing request is a processing request for the first language, and the second processing request is a processing request for the second language. For another example, when the information to be processed is the content to be translated, the first processing information is a processing request for the content to be translated. If the first response result also includes partial information of the content to be translated, the second response result may be a processing request for this partial information.

In an embodiment, the step S11 may include:
step 111, obtaining the information to be processed, and splitting the information to be processed into at least one first information to be processed and/or at least one second information to be processed according to the preset strategy; and
step 112, in response to the at least one first information to be processed meeting the first preset condition, outputting a first processing request so that the first target application or target service obtains a first response result based on the first processing request; and/or, in response to the at least one second information to be processed meeting the second preset condition, outputting a second processing request so that the second target application or target service obtains a second response result based on the second processing request.

In an embodiment, the first processing request corresponds to at least one first information to be processed, and the second processing request corresponds to at least one second information to be processed.

In an embodiment, the first information to be processed and/or the second information to be processed include but are not limited to voice information, gesture information, body movements and other information or information after processing these information, for example, which can be a control instruction obtained after processing voice information. Exemplary, in a voice control scene, the user of the processing device usually issues a multi-tasking voice instruction to the first application because he or she does not understand the instructions that the voice assistant service can execute. For example, the user issues an instruction to the vehicle-mounted voice assistant to "turn on autonomous driving mode and go to the Bund". At this time, the phone's voice service assistant splits the voice instruction into multi-task instructions, such as "turn on automatic driving" and "navigate to the Bund". Then, the vehicle-mounted voice assistant executes the processing request corresponding to the "turn on automatic driving" instruction and outputs a response prompt, and the navigation voice assistant executes the processing request corresponding to the "turn on automatic driving" instruction and outputs a response prompt. In this way, the current application or service can support multi-task processing, and can also make full use of the functions and interaction capabilities of the application or service to quickly output the corresponding response results, thus improving response efficiency and user experience.

In an embodiment, in the step S1 and/or step S12, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

The first response result does not match the first processing request. For example, the first response result does not completely match or does not match the content of the first processing request. For example, the first processing request is "translate hello", and the first response result is "unrecognized". The first response result does not match the processing device. For example, the format of the first response result does not match the function of the processing device, the first response result does not match the operating state of the application of the processing device, the permission level of the first response result is higher than the permission level of the processing device, and the first response result does not match the scene in which the processing device is located. The first target application or target service does not match the information to be processed, for example, the trust level for the first target application or target service may be lower than the trust level required to process the information to be processed. The device that obtains and/or outputs the first response result does not match the information to be processed, for example, the device may not be in the scene and/or mode associated with the information to be processed, such as, in a specific time period, specific location, child mode, navigation mode, sleep mode, conference mode, connection state, etc.

In an embodiment, in step S12, the first operation meeting the second preset condition includes at least one of the following:
the first operation is to confirm at least one first data information;
the first operation is to enter the preset application and/or service;
the first operation is to operate the preset function button;
the first operation is a preset gesture and/or a preset key operation;
the first operation is a preset voice instruction;
the first operation is a timeout and no response prompt information;
the first operation is an operation at a preset position and/or a preset time period.

In an embodiment, in the step S12, the processing device meeting the third preset condition includes at least one of the following:
an account for logging in to the processing device is a preset account;
the processing device is in a preset mode or scene;
the processing device has preset functions;
a state of the processing device application meets a preset state;
a permission of the processing device meet a preset permission;
a power of the processing device meets a preset power;
a network state of the processing device meets a preset network state.

In an embodiment, in the step S12, the outputting the second processing request includes:
determining key information in response to the second processing request;
determining the second target application or target service according to the key information, to make the second target application or target service respond based on the key information.

In an embodiment, the key information includes at least one of the location of the processing object in the second processing request, the triggering location, the processing time, the source application, and the target application category. By preliminary processing the second processing request, at least one of the location of the processing object in the second processing request, triggering location, the processing time, the source application, and the target application can be determined. For example, the human-computer interaction application A outputs the second processing request "turn on the air conditioner in the living room", it can be determined that the location of the processing object is the living room, the trigger time is the time when the voice information is input, the processing time is now, the source application is the human-computer interaction application A, and the target application category is the air-conditioning application. In this way, at least one of the air conditioning applications can be determined as the second target application or target service, and a response can be made based on key information, such as processing time.

In an embodiment, step S2 may be executed after step S1, may be executed before step S1, or may be executed simultaneously with step S1. For example, the second response result may be obtained after processing by the second target application or target service based on the second processing request when the first response result does not meet the first preset condition. It may also be that after the information to be processed is split into first processing information and second processing information, the first response result is obtained in response to the first processing information, and the second response result is obtained in response to the second processing information.

In one scene, the first target application or target service can first process the information to be processed, for example, process the language to be translated. After obtaining the first response result, the second target application or target service translates the first response result again to obtain the second response result, and then outputs the second response result, thereby improving the interactive effect of the submitted data while improving the accuracy of the data, and improving the user experience.

In another scene, the first target application or target service can process the first processing information while the second target application or target service processes the second processing information, and then combine the first response result with the second response result (such as the translation result), to improve interaction efficiency and data interaction effects, thereby improving user experience.

In an embodiment, the step S3 includes:
processing the first response result according to the first preset processing strategy; and/or
processing the second response result according to the second preset processing strategy.

In an embodiment, the first preset processing strategy and/or the second preset processing strategy includes at least one of the following:
transmitting through a preset transmission path;
processing through a preset device;
processing through a preset target application or target service;
outputting through a preset device;
outputting through a preset scene;
processing or outputting in a preset scene.

In an embodiment, the first preset processing strategy and the second preset processing strategy may be the same. Exemplarily, when the first response result and the second response result are the response results of different devices based on the same processing request, the first preset processing strategy and the second preset processing strategy are the same. For example, the information to be processed is "Play the chorus version of Little Rabbit Guaiguai", the first response result is the audio signal of the boy's version of Little Rabbit Guaiguai obtained by the mobile phone, and the second response result is the audio signal of the girl's version of Little Rabbit Guaiguai obtained by the car or TV. The audio signal of the boy's version of Little Rabbit Guaiguai and the audio signal of the girl's version of Little Rabbit Guaiguai are simultaneously played through the car or TV at the same time. In this way, it is possible to make full use of the device's functions and interactive capabilities to preset multiple response results, such that the interaction scene is not limited to the current functions and/or results and/or the current device, thereby making the functions more diverse, the interaction more flexible and smooth, and improving the user experience.

In an embodiment, the first preset processing strategy and the second preset processing strategy may also be different. In an embodiment, step S3 includes: in response to the second response result meeting the first preset condition, outputting the first response result according to the first preset processing strategy, and outputting the second response result according to the second preset processing strategy. The second preset processing strategy is different from the first preset processing strategy. Exemplarily, The information to be processed is "Play Jacky Cheung's song", the first response result is the first audio signal in Jacky Cheung's song obtained by the mobile phone (for example, the rating level does not meet the preset rating level), and the second response result is the second audio signal in Jacky Cheung's song obtained by the car or TV (for example, the rating level meets the preset rating level). Then the car or TV is used to play the second audio signal, and send the first audio signal to the car or TV, so that the car or TV plays the first audio signal after playing the second audio signal. In this way, after making full use of the functions and interaction capabilities of the device, multiple response results can be processed differently according to the matching degree between the multiple response results and the information to be processed, making the interaction more flexible and smooth, and improving the user experience.

In an embodiment, the step S3 includes:
step S31, processing at least one first response result and at least one second response result according to a preset processing strategy; and/or
step S32, outputting at least one first response result and at least one second response result according to a preset output strategy.

In an embodiment, the step S3 includes:
detecting whether the second response result meets the fourth preset condition, and/or whether the processing device meets the fifth preset condition. If not, proceed to step S31, and/or, if so, proceed to step S32.

In an embodiment, the second response result not meeting the fourth preset condition may, but is not limited to, include at least one of the following:
the second response result not matching the second processing request;
the second response result not matching the information to be processed;
the second response result not matching the processing device;
the second target application or target service corresponding to the second response result not matching the information to be processed and/or the processing device;
the device that obtains and/or outputs the second response result not matching the information to be processed and/or the processing device.

The second response result does not match the second processing request, for example, the second response result may not completely match the content of the second processing request. For example, the second processing request is "translate hello" and the second response result is "unrecognized". The second response result does not match the processing device, for example, the format of the second response result does not match the function of the processing device, the second response result does not match the operating state of the application of the processing device, the permission level of the second response result is higher than the permission level of the processing device, the second response result does not match the scene in which the processing device is located. For example, the privacy level of the second response result is higher than the privacy level of the scene in which the processing device is located. The second target application or target service does not match the information to be processed, for example, the trust level for the second target application or target service may be lower than the trust level required to process the information to be processed. The device that obtains and/or outputs the second response result does not match the information to be processed, for example, the device may not be in the scene and/or mode associated with the information to be processed, such as in a specific time period, specific location, child mode, navigation mode, sleep mode, conference mode, connection state, etc.

In an embodiment, the processing device not meeting the fifth preset condition may include but is not limited to at least one of the following:
the processing device not matching the first response result and/or the second response result;
the processing device not matching the information to be processed;
the processing device not matching the first target application or target service;
the processing device not matching the second target application or target service;
the scene of the processing device not meeting the preset condition.

The processing device does not match the first response result and/or the second response result. For example, it may be that the format of the first response result and/or the second response result does not match the function of the processing device, the first response result and/or the second response result does not match the operating state of the application of the processing device, the authority level of the first response result and/or the second response result is higher than the authority level of the processing device, the first response result and/or the second response result does not match the scene in which the processing device is located. For example, the first response result and/or the second response result is voice information, and the processing device is in a conference scene, etc.

In an embodiment, the step S31 includes:
step S31a, outputting the first response result and/or the second response result to at least one associated device, and/or receiving the third response result output by the associated device; or
step S31b, determining or generating at least one third response result, and/or outputting the third response result to at least one associated device.

In an embodiment, before the step S31a or the step S31b, the method further includes: determining at least one associated device according to the first response result and/or the second response result and/or the information to be processed and/or the operation information, and/or the scene in which the processing device is located.

In some embodiments, the processing device is connected to or within the same connected network as at least one device. When the processing device outputs the first response result and/or the second response result, or the third response result, the processing device needs to determine the associated device from at least one connected device. At this time, the processing device determines the associated device based on the matching relationship between the operation information and/or the information to be processed and/or the response result and other devices. Exemplarily, when the operation information is to select the sending device, if you click the icon position corresponding to the mobile phone displayed on the current interface of the processing device, the mobile phone is determined to be the associated device. For another example, in a smart home environment, when the user points the processing device (such as a mobile phone) to the refrigerator, the refrigerator is determined to be the associated device. For another example, when the third response result is a video file, the smart TV is determined to be the associated device based on the matching relationship between the video file and the smart TV.

In an embodiment, in the step S31b, determining or generating at least one third response result includes:
in response to obtaining the second operation, processing the first response result and/or the second response result; and/or
obtaining the processing result of the third target application or target service based on the first response result and/or the second response result. In an embodiment, the third target application or target service is located in the processing device.

In an embodiment, the second operation includes at least one of the following:
confirming at least one second data information;
accessing the preset application and/or service;
operating a preset function button;
a preset gesture and/or a preset key operation;
a preset voice instruction;
timeout and no response prompt information.

The third response result may be, but is not limited to, one of the first response result and the second response result, for example, the result of processing one of the first response result and the second response result, may be the result of processing the first response result or the second response result, may also be the result of processing (such as sorting, fusion, replacement, etc.) of the first response result and the second response result. Exemplarily, if the first response result and the second response result are for the same processing request, such as "translate hello", the response result obtained is, when the priority of the device that outputs the second response result is higher than the priority of the device that outputs the first response result, the second response result can be selected as the third response result for output. For another example, when the first response result and the second response result correspond to different processing requests split from the same information to be processed, such as "recommend nearby hotels" and "recommend nearby restaurants", after filtering the hotel information and restaurant information based on the current location and/or user ratings, etc., the filtered hotel information and restaurant information can be fused and output.

In an embodiment, the step S3 includes outputting the response result to be output according to a preset output strategy.

In an embodiment, the preset output strategy includes at least one of the following:
selecting at least one response result to be output according to the information selection strategy;
selecting at least one output device according to the device selection strategy;
selecting at least one response result to be output and/or the output sequence of at least one output device according to the sequence selection strategy;
the output form and/or the output time and/or the output scene.

At least one response result to be output and/or the output sequence of at least one output device is selected according to the sequence selection strategy. For example, multiple response results may be output simultaneously, or multiple response results may be output sequentially; and/or multiple devices may output simultaneously, or multiple devices may output sequentially.

In an embodiment, selecting at least one response result to be output according to the information selection strategy includes:
obtaining the privacy level of the response result according to the keyword in the response result, and/or, obtaining the type of response result according to the format of the response result, and/or, obtaining the matching level of the response result and/or the network score of the response result according to the matching degree of the response result and the information to be processed;
selecting the information to be output according to the scene in which the user is located and/or the scene in which the device to be output is located.

In an embodiment, selecting at least one output device according to the device selection strategy includes:
selecting the device to be output based on the attribute of the response result to be output, and/or based on the scene the user is in, and/or the preset setting.

In an embodiment, selecting at least one response result to be output and/or the output sequence of at least one output device according to the sequence selection strategy includes:
selecting at least one response result to be output and/or an output sequence of at least one output device according to the attribute of at least one response result to be output and/or the content of at least one response result to be output and/or the scene in which the processing device is located.

Exemplarily, in a driving scenario, for example, if the information to be processed is "Let's have some entertainment programs", the first response result is the video signal obtained by the mobile phone, and the second response result is the audio signal obtained by the mobile phone, then the audio signal is selected as the information to be output, and the car or TV is selected to play the audio signal. For another example, if the information to be processed is "Buy a bottle of red wine on JD.com and some shrimps on Meituan", the first response result is "100 yuan has been paid for the red wine", and the second response result is "The shrimps have been bought". When there are other users in the car or at home, the second response result and the second response result are processed to obtain the third response result, and the third response result is broadcast using the car or TV voice, for example, "The red wine has been paid and the shrimp has been bought", and then the mobile phone is used to display "The red wine has been paid for 100 yuan".

The following describes three application scenarios based on the processing methods of the present application.

FIG. 4(a) to FIG. 4(c) are schematic interface diagrams of a processing device in a scenario according to the first embodiment. The illustrated scenario is a translation scenario, and the application or service is a voice assistant as an example. FIG. 4(a) shows the interface of voice assistant A. Voice assistant A prompts "You said, I am listening...". At this time, the user can input instructions by voice. Since the present application can integrate functions and interaction capabilities between applications or services, the instructions that voice assistant A can accept are richer, without prompting the user for input content. Then, as shown in FIG. 4(b),
the device interface displays the content entered by the user "Translate you are a happy dog" to prompt the user to enter the state. Based on the information to be processed input by the user, the determined strategy is: process it through voice assistant A, and then output the prompt information "Voice assistant A has been assigned to translate for you...", and the interface shown in FIG. 4(b) can be a system-level interface. Afterwards, as shown in FIG. 4(c), after voice assistant A executes the translation instruction, the corresponding first response result is displayed, for example, translation result a. When the user's confirmation instruction is not received after a timeout, voice assistant B is called for translation, and the second response result, such as the translation result of voice assistant B is displayed on the interface shown in FIG. 4(c). In this way, in the translation scenario, by utilizing the functions or capabilities of different voice assistants, an accurate interactive experience can be provided even if the currently used voice assistant cannot meet the needs. As shown in the interface shown in FIG. 4(c), it is also possible to compare the first response result with the second response result, and highlight the comparison result (for example, mark it with an underline), which enables users to make decisions as quickly as possible and integrate response results, and can further improve interaction accuracy and efficiency.

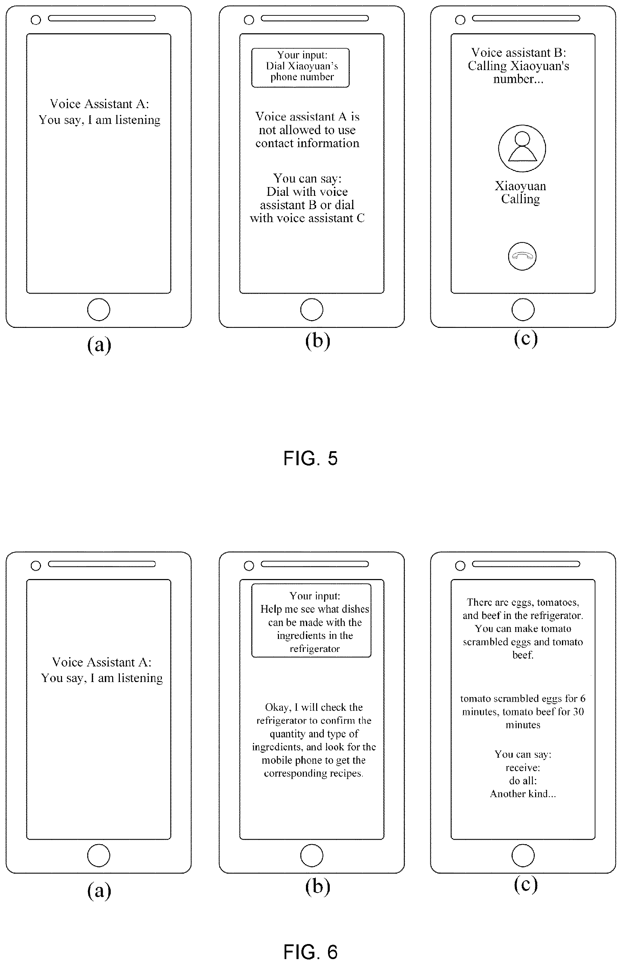

FIG. 5(a) to FIG. 5(c) are schematic interface diagrams of a processing device in another scenario according to the first embodiment. The illustrated scenario is a scenario of making a call, and the application or service is a voice assistant and the voice assistant is installed on the processing device as an example. FIG. 5(a) shows the interface of voice assistant A. Voice assistant A prompts "You said, I am listening...". At this time, the user can input instructions by voice. Since the present application can integrate functions and interaction capabilities between applications or services, the instructions that voice assistant A can accept are richer, without prompting the user for input content. Afterwards, as shown in FIG. 5(b), the device interface displays the content entered by the user "Call Xiaoyuan's phone number" to prompt the user, and the strategy determined based on user input is: the voice assistant A does not have permission to control voice assistant B to dial or prompt, and outputs the first response result "Voice assistant A is not allowed to use contact information. You can say: voice assistant B dials or voice assistant C dials." The interface shown in FIG. 5(b) can be a system-level interface or the interface of voice assistant B. After that, as shown in FIG. 5(c), when the user selects voice assistant B to dial or times out and does not respond, voice assistant B executes the instruction to make a call, and displays the second response result, for example, a prompt screen for making a call, in the interface of voice assistant B. The next time you call Xiaoyuan, you can use voice assistant B to respond first. In this way, in the scenario of making a call, the permissions of different voice assistants are assigned and added to the user's decision-making process. Even if the currently used voice assistant cannot meet the needs, an accurate interactive experience can be provided and data security can be ensured.

FIG. 6(a) to FIG. 6(c) are schematic interface diagrams of a processing device in yet another scenario according to the first embodiment. The illustrated scenario is a smart home scenario, and the application or service is a voice assistant and the voice assistant is installed on the first device and the second device respectively. FIG. 6(a) shows the interface of the processing device, the processing device prompts "You said, I'm listening..." with a voice prompt. At this time, the user can input instructions by voice. Since the present application can integrate functions and interaction capabilities between different devices and/or different applications or services, the instructions that the processing device can accept are richer, without prompting the user for input content. Afterwards, as shown in FIG. 6(b), the interface of the processing device displays the content entered by the user "Help me see what dishes can be made with the ingredients in the refrigerator" to prompt the user, and the strategy determined based on the user input is that the refrigerator obtains the type of ingredients, and the mobile phone obtains the corresponding recipes, and displays "Okay, I will look at the refrigerator to confirm the quantity and type of ingredients, and then look for the mobile phone to obtain the corresponding recipes." The interface as shown in FIG. 6(b) is the interface of the processing device. Afterwards, the processing device receives the response results output by the refrigerator and mobile phone, and sends the corresponding results to the automatic cooking machine. When the automatic cooking machine feedbacks the required time to complete, as shown in FIG. 6(c), it displays "There are eggs, tomatoes, and beef in the refrigerator. You can make tomato scrambled eggs and tomato beef" and/or displays "Tomato scrambled eggs for six minutes and tomato beef for thirty minutes." As shown in the interface of FIG. 6(c), it is also possible to prompt the user with relevant instructions, "You can say: received; do both; try another one...", prompting the user to input instructions based on the reminder content to improve interaction efficiency. In this way, in a smart home scenario, based on the functional configuration interaction methods of different devices, users can use accurate devices for reminders. Even if the required information cannot be obtained by the current device, it can provide an accurate interactive experience and ensure the security of the data.

The processing method of the present application includes: in response to at least one first response result not meeting the preset condition; obtaining at least one second response result; and preprocessing at least one first response result and at least one second response result. In this way, when at least one first response result does not meet the preset condition, by obtaining the second response result, and then processing the first response result and the second response result, when the response results are obtained, the response results can be processed again, making full use of the functions and response results of different applications or services, improving the accuracy and/or interaction effect and/or security of the response results, and improving the user experience. In addition, the response results can also be fused, which can reduce the number of user interactions, reduce the time and frequency of user interruptions, and further improve the user experience.

### Second embodiment

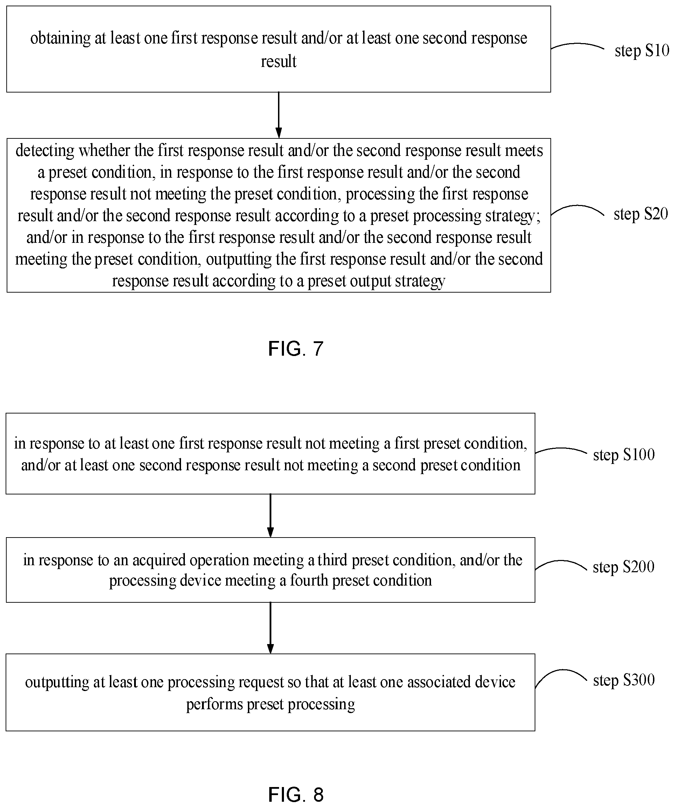

FIG. 7 is a schematic flowchart of a processing method according to the second embodiment. As shown in FIG. 7, a processing method of the present application is applied to a processing device, including:
step S10, obtaining at least one first response result and/or at least one second response result;
step S20, detecting whether the first response result and/or the second response result meets the preset condition. If the first response result and/or the second response result does not meet the preset condition, it will be processed according to the preset processing strategy; and/or, if the first response result and/or the second response result meets the preset condition, it will be output according to the preset output strategy.

In an embodiment, the first response result is obtained and/or output by at least one first target application or target service, and the second response result is obtained and/or output by at least one second target application or target service. The first target application or target service may be located in the first device, and the second target application or target service may be located in the second device. At least one of the first target application or target service and the second target application or target service may also be located in the processing device. In an embodiment, at least one of the processing device, the first device, and the second device may include terminal devices (such as mobile phones, tablets, etc.), wearable smart devices (such as smart watches, smart bracelets, smart headphones, etc.), smart home devices (such as smart TVs, smart speakers, etc.), Internet of Vehicles devices (such as smart cars, vehicle-mounted terminals, etc.). Applications or services may include human-computer interaction applications, and human-computer interaction applications include applications or services that can perform human-computer interaction through touch operations, gestures, voice, air gestures, etc. The first target application or target service and/or the second target application or target service includes at least one of a voice assistant application, a social media application, an information content application, a tool application, and a system service.

Through the above manner, when the first response result and/or the second response result does not meet the preset condition, the first response result and the second response result are preprocessed. When the first response result and/or the second response result meets the preset condition, output is performed according to the preset strategy, and processing is performed according to the preset processing strategy, which makes full use of the functions and/or response results of different applications or services to improve the accuracy of the output. Output is performed when preset conditions are met, which improves the efficiency of the output and enhances the user experience.

Exemplarily, when it is detected that the first response result and/or the second response result does not meet the preset condition, for system-level human-computer interaction applications or security levels, and/or functions supported by human-computer interaction applications with higher trust levels, prioritize calling system-level human-computer interaction applications or human-computer interaction applications with higher security levels and/or trust levels to obtain third response results with higher security levels, and/or trust levels, and/or higher matching degrees. And/or, when the first response result and/or the second response result meets the preset condition, the corresponding output device, for example, the device closest to the user and best matching the scene is selected for output. In this way, after making full use of the functions and interaction capabilities of the application or service, the corresponding response results can be quickly output, thereby improving the efficiency of the response. It is also possible to obtain the response results again after processing to improve the accuracy of the response results, which makes the interaction scenario not limited to the currently obtained response results, making the interaction more flexible and smooth, and improving the user experience.

In an embodiment, the second response result may be obtained by processing the second target application or target service based on the second processing request when the first response result does not meet the first preset condition, and the second response result may also be obtained in response to the second processing information after the information to be processed is split into the first processing information and the second processing information.

In an embodiment, the step S10 includes:
step S101, in response to the information to be processed, outputting a first processing request to the first target application or target service and the second target application or target service;
step S102, receiving a first response result output by the first target application or target service, and/or receiving a second response result output by the second target application or target service.

Exemplarily, the first target application or target service may be selected according to, but is not limited to, the first selection strategy. For example, the first target application or target service may be selected according to the privacy level of the information to be processed, response speed requirements, or the like. The second target application or target service may be selected according to, but is not limited to, the second selection policy. For example, the second target application or target service may be selected based on the attributes of the information to be processed and/or the scene in which the processing device is located, For example, select a target application or target service whose response speed meets the response speed required for the information to be processed, and whose privacy level meets preset conditions. In an embodiment, the first selection strategy and the second selection strategy can be automatically generated by the system according to the attributes of the information to be processed, or can be selected according to the selection instructions for the prompt information.

Exemplarily, in a translation scenario, the first processing information can be processed by the first target application or target service while the second processing information can be processed by the second target application or target service. Then, the first response result and the second response result, for example, the translation result, are fused and output to improve the interaction efficiency and the data interaction effect, thereby improving the user experience.

In an embodiment, the step S10 includes:
in response to the information to be processed, outputting the first processing request so that the first target application or target service obtains the first response result based on the first processing request; and
in response to at least one first response result not meeting the first preset condition and/or the first operation meeting the second preset condition and/or the processing device meeting the third preset condition, outputting the second processing request, so that the second target application or target service obtains a second response result.

In an embodiment, the information to be processed includes, but is not limited to, information such as voice information, gesture information, body movements, or information after processing these information. For example, the information to be processed may be a control instruction obtained after processing voice information. The second processing request can be the same as the first processing request, or can be complementary to the first processing request based on the information to be processed, or can be obtained separately based on two mutually related information to be processed. In an embodiment, the second processing request may also be obtained by processing the first response result based on the information to be processed. For example, when the information to be processed is content to be translated and includes a first language and a second language, the first processing request is a processing request for the first language, and the second processing request is a processing request for the second language. For another example, the information to be processed is the content to be translated, and the first information to be processed is a processing request for the content to be translated. If the first response result also includes partial information of the content to be translated, the second response result may be a processing request for this partial information.

In an embodiment, the step S10 may include:
step 1011, obtaining the information to be processed, and splitting the information to be processed into at least one first information to be processed and/or at least one second information to be processed according to the preset strategy;
step 1012, in response to the at least one first information to be processed meeting the first preset condition, outputting a first processing request so that the first target application or target service obtains a first response result based on the first processing request; and/or, in response to the at least one second information to be processed meeting the second preset condition, outputting a second processing request so that the second target application or target service obtains a second response result based on the second processing request.

In an embodiment, the first processing request corresponds to at least one first information to be processed, and the second processing request corresponds to at least one second information to be processed.

In an embodiment, the first information to be processed and/or the second information to be processed includes, but is not limited to, information such as voice information, gesture information, body movements, or information after processing these information. For example, it may be a control instruction obtained by processing voice information. Exemplarily, in voice control scenarios, processing device users usually issue multi-tasking voice instructions to the first application because they do not understand the instructions that the voice assistant service can execute. For example, if the user issues an instruction to the vehicle-mounted voice assistant to "turn on autonomous driving mode and go to the Bund", and at this time the mobile phone's voice service assistant splits the voice instruction into multi-task instructions, such as "turn on automatic driving" and "navigate to the Bund". Then, the vehicle-mounted voice assistant executes the processing request corresponding to the "turn on automatic driving" instruction and outputs a response prompt, and the navigation voice assistant executes the processing request corresponding to the "turn on automatic driving" instruction and outputs a response prompt. In this way, the current application or service can support multi-task processing, and can also make full use of the functions and interaction capabilities of the application or service to quickly output the corresponding response results, thereby improving response efficiency and user experience.

In an embodiment, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

The first response result does not match the first processing request. For example, the first response result does not completely match the content of the first processing request. For example, the first processing request is "translate hello", and the first response result is "unrecognized". The first response result does not match the processing device. For example, the format of the first response result does not match the function of the processing device, the first response result does not match the operating state of the application of the processing device, the permission level of the first response result is higher than the permission level of the processing device, and the first response result does not match the scene in which the processing device is located. The first target application or target service does not match the information to be processed, for example, the trust level for the first target application or target service may be lower than the trust level required to process the information to be processed. The device that obtains and/or outputs the first response result does not match the information to be processed, for example, the device may not be in the scene and/or mode associated with the information to be processed, such as, in a specific time period, specific location, child mode, navigation mode, sleep mode, conference mode, connection state, etc.

In an embodiment, the first operation meeting the second preset condition includes at least one of the following:
the first operation is to confirm at least one first data information;
the first operation is to enter the preset application and/or service;
the first operation is to operate the preset function button;
the first operation is a preset gesture and/or a preset key operation;
the first operation is a preset voice instruction;
the first operation is a timeout and no response prompt information;
the first operation is an operation at a preset position and/or a preset time period.

In an embodiment, the processing device meeting the third preset condition includes at least one of the following:
an account for logging in to the processing device is a preset account;
the processing device is in a preset mode or scene;
the processing device has preset functions;
a state of the processing device application meets a preset state;
a permission of the processing device meet a preset permission;
a power of the processing device meets a preset power;
a network state of the processing device meets a preset network state.

In an embodiment, the outputting the second processing request includes:
determining key information in response to the second processing request;
determining the second target application or target service according to the key information, to make the second target application or target service respond based on the key information.

In an embodiment, the key information includes at least one of the location of the processing object in the second processing request, the triggering location, the processing time, the source application, and the target application category. By preliminary processing the second processing request, at least one of the location of the processing object in the second processing request, the triggering location, the processing time, the source application, and the target application can be determined. For example, the human-computer interaction application A outputs the second processing request "turn on the air conditioner in the living room", it can be determined that the location of the processing object is the living room, the trigger time is the time when the voice information is input, the processing time is now, the source application is the human-computer interaction application A, and the target application category is the air-conditioning application. In this way, at least one of the air conditioning applications can be determined as the second target application or target service, and a response can be made based on key information, such as processing time.

For example, in a translation scenario, the first target application or target service may first process the information to be processed, for example, process the language to be translated, to obtain the first response result, the second target application or target service translates the first response result again to obtain the second response result. For another example, the second response result is output to improve data accuracy and submit the interactive effect of the data, thereby improving the user experience.

In an embodiment, the step S20 includes:
detecting whether the first response result meets a preset condition;
if the first response result meets the preset condition, outputting the first response result according to the preset output strategy;
if the first response result does not meet the preset condition, detecting whether the second response result meets the preset condition;
if the second response result meets the preset condition, outputting the second response result according to the preset output strategy;
if the second response result does not meet the preset conditions, processing according to the preset processing strategy.

In an embodiment, processing according to the preset processing strategy includes:
outputting prompt information, and in response to the acquired second operation, processing the first response result and/or the second response result according to the preset processing strategy; and/or
outputting the processing request to the associated device so that the associated device performs preset processing; and/or
receiving or determining or generating a third response result.

In an embodiment, receiving or generating or determining at least one third response result includes:
outputting the first response result and/or the second response result to at least one associated device, and/or receiving a third response result output by the associated device; or
determining or generating at least one third response result, and/or outputting the third response result to at least one associated device.

In an embodiment, determining or generating at least one third response result includes:
in response to the obtained third operation, processing the first response result and/or the second response result; and/or
obtaining the processing result of a third target application or target service based on the first response result and/or the second response result. In an embodiment, the third target application or target service is located in the processing device.

Exemplarily, the information to be processed is "Search for Gao yuanyuan". If the first response result is a picture of Gao Yuanyuan that meets the preset condition (for example, a picture with pixels higher than the threshold), then the first response result is output. If the first response result is not a picture of Gao Yuanyuan that meets the preset condition, then detect whether the second response result is a picture of Gao Yuanyuan that meets the preset condition. If the second response result is a picture of Gao Yuanyuan that meets the preset condition, the second response result is output. If the second response result is not a picture of Gao Yuanyuan that meets the preset condition, it is processed according to the preset strategy, for example, output the first response result and/or the second response result (for example, the picture with higher pixels among the two), or, process the first response result and/or the second response result, or output the third response result (for example, the result of pixel processing on the first response result and/or the second response result).

In an embodiment, the step S20 includes:
if the first response result does not meet the fourth preset condition, processing the first response result according to the first preset processing strategy; and/or
if the first response result meets the fourth preset condition, outputting the first response result according to the first preset output strategy; and/or
if the second response result does not meet the fifth preset condition, processing the second response result according to the second preset processing strategy; and/or
if the second response result meets the fifth preset condition, outputting the second response result according to the second preset output strategy.

In an embodiment, the first response result not meeting the fourth preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

The first response result does not match the first processing request. For example, the first response result does not completely match the content of the first processing request. For example, the first processing request is "translate hello", and the first response result is "unrecognized". The first response result does not match the processing device. For example, the format of the first response result does not match the function of the processing device, the first response result does not match the operating state of the application of the processing device, the permission level of the first response result is higher than the permission level of the processing device, and the first response result does not match the scene in which the processing device is located. The first target application or target service does not match the information to be processed, for example, the trust level for the first target application or target service may be lower than the trust level required to process the information to be processed. The device that obtains and/or outputs the first response result does not match the information to be processed, for example, the device may not be in the scene and/or mode associated with the information to be processed, such as, in a specific time period, specific location, child mode, navigation mode, sleep mode, conference mode, connection state, etc.

In an embodiment, the second response result not meeting the fifth preset condition may, but is not limited to, include at least one of the following:
the second response result not matching the second processing request;
the second response result not matching the information to be processed;
the second response result not matching the processing device;
the second target application or target service corresponding to the second response result not matching the information to be processed and/or the processing device;
the device that obtains and/or outputs the second response result not matching the information to be processed and/or the processing device.

In an embodiment, the first preset processing strategy and/or the second preset processing strategy includes at least one of the following:
transmitting via a preset transmission path;
processing via a preset device;
processing via a preset target application or target service;
outputting via the preset device;
outputting through a preset scene;
processing or outputting in the preset scene.

In an embodiment, the first preset processing strategy and the second preset processing strategy may be the same. For example, when the first response result and the second response result are the response results of different devices based on the same processing request, for example, the information to be processed is "Play the chorus version of Little Rabbit Guaiguai", the first response result is the audio signal of the boy's version of Little Rabbit's obtained by the mobile phone, and the second response result is the audio signal of the girl's version of Little Rabbit obtained by the car or TV, then the audio signal of the boy's version of Little Rabbit and the audio signal of the girl's version of Little Rabbit are simultaneously played through the car or TV.

Exemplarily, the first processing request is "Search for Liu Tao". If the first response result is a picture of Liu Tao that meets the fourth preset condition (for example, a picture with pixels higher than the threshold), then the first response result is output. If the first response result is not a picture of Liu Tao that meets the fourth preset condition, then the first response result is processed (for example, adjust pixels). The second processing request is "Search for Liu Tao", and the second response result is the second response result that meets the fifth preset condition (for example, including resume information such as Liu Tao's name, position, etc.). If the second response result does not meet the fifth preset condition, the processing request can be sent to the associated device again based on the second response result. In this scenario, the processing and output of the first response result and the second response result are independent of each other, which can improve the interaction effect and increase the response speed of the interaction, thereby improving the efficiency of interaction.

In an embodiment, the step S20 includes: detecting whether the first response result meets a fourth preset condition;
if the first response result meets the fourth preset condition, detecting whether the second response result meets the fifth preset condition;
if the second response result meets the fifth preset condition, outputting the first response result and the second response result according to a preset output strategy;
if the second response result does not meet the fifth preset condition, outputting the second processing request to at least one associated device, so that the associated device outputs a third response result;
in response to the third response result meeting the fifth preset condition, outputting the first response result and the third response result according to a preset output strategy.

Exemplarily, in a driving or home scenario, for example, the information to be processed is "Buy a bottle of red wine on JD.com and some shrimp on Meituan". The first response result is "The shrimp has been bought", and the second response result is "100 yuan has been paid for the red wine". If the first response result meets the fourth preset condition and the second response result meets the fifth preset condition, then the first response result: "The shrimp has been bought" and the second response result: "The red wine has been paid for 100 yuan". If the first response result meets the fourth preset condition and the second response result does not meet the fifth preset condition (for example, in a scenario where there are other users in the car or at home, the privacy word "100 yuan" exists), then the second response result is processed to obtain the third response result, for example, "The red wine has been paid for", and then the car or TV voice is used to broadcast the first response result and the third response result, for example, "The red wine has been paid for", "The shrimp has been bought". In this way, after making full use of the functions and interaction capabilities of the application and/or device, the response results can be detected sequentially, and output when multiple response results meet the corresponding preset conditions. When at least one response result does not meet the corresponding preset conditions, response processing is performed, making the response results more accurate, protecting the user's privacy, making the interaction more flexible, smooth, and secure, and improving the user experience. In addition, the response results can also be fused, which can reduce the number of user interactions, reduce the time and frequency of user interruptions, and further improve the user experience.

In an embodiment, the step S20 includes:
processing at least one first response result and/or at least one second response result according to a preset processing strategy; and/or
outputting at least one first response result and/or at least one second response result according to a preset output strategy.

In an embodiment, in the step S20, processing according to the preset processing strategy includes:
outputting the first response result and/or the second response result to at least one associated device, and/or receiving the third response result output by the associated device; or,
determining or generating at least one third response result, and/or outputting the third response result to at least one associated device.

In an embodiment, in the step S20, processing according to the preset processing strategy further includes: determining at least one associated device according to the first response result and/or the second response result and/or the information to be processed and/or the operation information and/or the scene in which the processing device is located.

In an embodiment, the processing device is connected to or within the same connected network as at least one device. When the processing device outputs the first response result and/or the second response result, or the third response result, the processing device needs to determine the associated device from at least one connected device. At this time, the processing device determines the associated device based on the matching relationship between the operation information and/or the information to be processed and/or the response result and other devices. Exemplarily, when the operation information is to select the sending device, if you click the icon position corresponding to the mobile phone displayed on the current interface of the processing device, the mobile phone is determined to be the associated device. For another example, in a smart home environment, when the user points the processing device (such as a mobile phone) to the refrigerator, the refrigerator is determined to be the associated device. For another example, when the third response result is a video file, the smart TV is determined to be the associated device based on the matching relationship between the video file and the smart TV.

In an embodiment, determining or generating at least one third response result includes:
in response to the obtained third operation, processing the first response result and/or the second response result; and/or
obtaining the processing result of the third target application or target service based on the first response result and/or the second response result. In an embodiment, the third target application or target service is located in the processing device.

In an embodiment, the third operation includes at least one of the following:
confirming at least one third data information;
accessing a preset application and/or service;
operating a preset function button;
a preset gesture and/or a preset key operation;
a preset voice instruction;
timeout and no response prompt information.

The third response result may be, but is not limited to, one of the first response result and the second response result, for example, the result of selecting one of the first response result and the second response result, can also be the result of processing the first response result or the second response result, or the result of processing (such as sorting, fusion, replacement, etc.) of the first response result and the second response result. Exemplarily, if the first response result and the second response result are response results obtained for the same processing request, such as "translate hello", when the priority of the device that outputs the second response result is higher than the priority of the device that outputs the first response result, the second response result can be selected as the third response result for output. For another example, when the first response result and the second response result correspond to different processing requests split from the same information to be processed, such as "recommend nearby hotels" and "recommend nearby restaurants", after filtering the hotel information and restaurant information based on the current location and/or user ratings, etc., the filtered hotel information and restaurant information can be fused and output. In this way, after making full use of the functions and interaction capabilities of the application and/or device, the response results can be detected sequentially, and when multiple response results meet the corresponding preset conditions, output can be performed. When at least one response result does not meet the corresponding preset conditions, response processing is performed, making the response results more accurate, protecting the user's privacy, making the interaction more flexible, smooth, and secure, and improving the user experience. In addition, the response results can also be fused, which can reduce the number of user interactions, reduce the time and frequency of user interruptions, and further improve the user experience.

In an embodiment, the present output strategy includes at least one of the following:
selecting at least one response result to be output according to the information selection strategy;
selecting at least one output device according to the device selection strategy;
selecting at least one response result to be output and/or the output sequence of at least one output device according to the sequence selection strategy;
the output form and/or the output time and/or the output scene.

At least one response result to be output and/or the output sequence of at least one output device are selected according to the sequence selection strategy. For example, multiple response results may be output simultaneously or multiple response results may be output sequentially and/or multiple devices may output simultaneously or multiple devices may output sequentially.

In an embodiment, selecting at least one response result to be output according to the information selection strategy includes:
obtaining the privacy level of the response result based on the keywords in the response result, and/or, obtaining the type of response result based on the format of the response result, and/or, obtaining the matching level of the response result according to the matching degree of the response result and the information to be processed, and/or, obtaining the network score of the response results through the network; and
selecting the information to be output according to the scene in which the user is located and/or the scene in which the device to be output is located.

In an embodiment, selecting at least one output device according to the device selection strategy includes:
selecting the device to be output based on the attributes of the response result to be output, and/or based on the scenario the user is in, and/or the default settings.

In an embodiment, selecting at least one response result to be output and/or the output sequence of at least one output device according to the sequence selection strategy includes:
selecting at least one response result to be output and/or an output sequence of at least one output device according to the attributes of at least one response result to be output and/or the content of at least one response result to be output and/or the scene in which the processing device is located.

Exemplarily, in a driving scenario, for example, the information to be processed is "Let's have some entertainment", the first response result is the video signal obtained by the mobile phone, and the second response result is the audio signal obtained by the mobile phone, then the audio signal is selected as the information to be output, and the car or TV is selected to play the audio signal. For another example, the information to be processed is "Buy a bottle of red wine on JD.com and some shrimp on Meituan", the first response result is "The red wine has been paid for 100 yuan", the second response result is "The shrimp has been bought". When there are other users in the car, the first response result and the second response result are processed to obtain the third response result, for example, "The red wine has been paid and the shrimp has been bought". After the third response result is selected as the result to be output, the car or TV is used to broadcast the third response result, for example, "The red wine has been paid, the shrimp has been bought", and then the mobile phone is used to display "The red wine has been paid for 100 yuan".

The present application provides a processing method, including: in response to obtaining at least one first response result and/or at least one second response result; detecting whether the first response result and/or the second response result meets the preset condition, if the first response result and/or the second response result meets the preset condition, processing according to the preset processing strategy; and/or, if the first response result and/or the second response result does not meet the preset condition, outputting according to the preset output strategy. In this way, when the first response result and/or the second response result does not meet the preset condition, further processing is performed according to the preset processing strategy, which makes full use of the functions and/or response results of different applications or services to improve the output accuracy. Output is performed when preset conditions are met, which improves the efficiency of the output and enhances the user experience.

### Third embodiment

FIG. 8 is a schematic flowchart of a processing method according to the third embodiment. As shown in FIG. 8, a processing method of the present application is applied to a processing device, including:
S100, in response to at least one first response result not meeting the first preset condition, and/or at least one second response result not meeting the second preset condition;
S200, in response to the obtained operation meeting the third preset condition, and/or the processing device meeting the fourth preset condition; and
S300, outputting at least one processing request to enable at least one associated device to perform preset processing.

In an embodiment, the first response result is obtained and/or output by at least one first target application or target service, and the second response result is obtained and/or output by at least one second target application or target service. The first target application or target service may be located in the first device, and the second target application or target service may be located in the second device. At least one of the first target application or target service and the second target application or target service may also be located in the processing device. In an embodiment, at least one of the processing device, the first device, and the second device may include terminal devices (such as mobile phones, tablets, etc.), wearable smart devices (such as smart watches, smart bracelets, smart headphones, etc.), smart home devices (such as smart TVs, smart speakers, etc.), Internet of Vehicles devices (such as smart cars, vehicle-mounted terminals, etc.). Applications or services may include human-computer interaction applications, and human-computer interaction applications include applications or services that can perform human-computer interaction through touch operations, gestures, voice, air gestures, etc. In an embodiment, the first target application or target service and/or the second target application or target service include at least one of voice assistant applications, social media applications, information content applications, tool applications, and system services.

Through the above manner, when in response to at least one first response result not meeting the first preset condition, and/or, at least one second response result not meeting the second preset condition, at least one processing request can be output, so that at least one associated device can perform preset processing, the functions and interaction capabilities of the device can be fully utilized, and it can be combined with user interaction decision-making, which can not only improve the accuracy of response results, but also improve the interaction effect, so that the interaction scenario is not limited to the currently used application or service, the interaction is more flexible and smooth, and the user experience is improved.

Exemplarily, when in response to at least one first response result not meeting the first preset condition, and/or, at least one second response result not meeting the second preset condition, for functions supported by system-level human-computer interaction applications or security levels, and/or, higher trust level human-computer interaction applications, prioritize calling the system-level human-computer interaction application or the human-computer interaction application with a higher security level and/or trust level in the associated device to obtain the third response result with a higher security level, trust level, and/or matching degree. And/or, when the third response result meets the preset conditions, select the corresponding output device, for example, the device closest to the user and best matching the scene for output. In this way, the functions and interaction capabilities of the device can be fully utilized and combined with user interaction decision-making, which can not only improve the accuracy of the response results, but also improve the interaction effect. This makes the interaction scenarios not limited to the currently used applications or services, making the interaction more flexible and smooth, and improving the user experience.

In an embodiment, the step S100 includes:
in response to the information to be processed, outputting the first processing request and the second target application or target service;
receiving a first response result output by the first target application or target service, and/or receiving a second response result output by the second target application or target service.

Exemplarily, the first target application or target service may be selected according to, but is not limited to, the first selection strategy, for example, the target application or target service with the fastest response speed is selected. The second target application or target service may be, but is not limited to, selected according to the second selection strategy, for example, the target application or target service with the highest trust level for the functions required for the information to be processed is selected. The second target application or target service may also be determined by the user based on the selected target application or target service in the output candidate application or service interface. In an embodiment, the first selection strategy and the second selection strategy can be automatically generated by the system based on the attributes of the information to be processed, or can be selected based on user selection instructions for prompt information.

In an embodiment, the step S100 includes:
in response to the information to be processed, outputting the first processing request so that the first target application or target service obtains the first response result based on the first processing request;
in response to at least one first response result not meeting the first preset condition, and/or the first operation meeting the second preset condition, and/or the processing device meeting the third preset condition, outputting the second processing request, so that the second target application or target service obtains a second response result.

In an embodiment, the information to be processed includes but is not limited to information such as voice information, gesture information, body movements, or information obtained by processing these information, for example, which may be a control instruction obtained by processing voice information. The second processing request can be the same as the first processing request, or can be complementary to the first processing request based on the information to be processed, or can be obtained separately based on two mutually related information to be processed. In an embodiment, the second processing request may also be obtained by processing the first response result based on the information to be processed. For example, when the information to be processed is content to be translated and includes a first language and a second language, the first processing request is a processing request for the first language, and the second processing request is a processing request for the second language. For another example, the information to be processed is the content to be translated, and the first processing information is a processing request for the content to be translated. If the first response result also includes partial information of the content to be translated, the second response result may be a processing request for this partial information.

In an embodiment, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

The first response result does not match the first processing request. For example, the first response result does not exactly match the content of the first processing request. For example, the first processing request is "translate hello", and the first response result is "unrecognized". The first response result does not match the processing device. For example, the format of the first response result does not match the function of the processing device, the first response result does not match the operating state of the application of the processing device, the permission level of the first response result is higher than the permission level of the processing device, and the first response result does not match the scene in which the processing device is located. The first target application or target service does not match the information to be processed, for example, the trust level for the first target application or target service may be lower than the trust level required to process the information to be processed. The device that obtains and/or outputs the first response result does not match the information to be processed, for example, the device may not be in the scene and/or mode associated with the information to be processed, such as, in a specific time period, specific location, child mode, navigation mode, sleep mode, conference mode, connection state, etc.

In an embodiment, the first operation meeting the second preset condition includes at least one of the following:
the first operation is to confirm at least one first data information;
the first operation is to enter the preset application and/or service;
the first operation is to operate the preset function button;
the first operation is a preset gesture and/or a preset key operation;
the first operation is the preset voice instruction;
the first operation is a timeout and no response prompt information;
the first operation is an operation at a preset position and/or a preset time period.

In an embodiment, the processing device meeting the third preset condition includes at least one of the following:
the account used to log in to the processing device is the preset account;
the processing device is in a preset mode or scene;
the processing device has a preset function;
the state of the processing device application meets the preset state;
the permission of the processing device meets the preset permission;
the power of the processing device meets the preset power;
the network state of the processing device meets the preset network state.

In an embodiment, outputting the second processing request includes:
determining key information in response to the second processing request; and
determining the second target application or target service according to the key information, such that the second target application or target service responds based on the key information.

In an embodiment, the key information includes at least one of the location of the processing object in the second processing request, the triggering location, the processing time, the source application, and the target application category. By preliminary processing the second processing request, at least one of the location of the processing object in the second processing request, the triggering location, the processing time, the source application, and the target application can be determined. For example, the human-computer interaction application A outputs the second processing request "turn on the air conditioner in the living room", it can be determined that the location of the processing object is the living room, the trigger time is the time when the voice information is input, the processing time is now, the source application is the human-computer interaction application A, and the target application category is the air-conditioning application. In this way, at least one of the air conditioning applications can be determined as the second target application or target service, and a response can be made based on key information, such as processing time.

In an embodiment, the second response result may be obtained by processing the second target application or target service based on the second processing request when the first response result does not meet the first preset condition. It may also be that after the information to be processed is split into the first processing information and the second processing information, when the first response result is obtained in response to the first processing information, the second response result is obtained in response to the second processing information.

In one scenario, the first target application or target service can first process the information to be processed, for example, process the language to be translated to obtain the first response result. Then, the second target application or target service translates the first response result again to obtain the second response result, and then outputs the second response result, to improve the accuracy of the data, improve the interactive effect of the data, thereby improving the user experience.

In another scenario, the first target application or target service can process the first processing information while the second target application or target service processes the second processing information, and then the first response result and the second response result, such as the translation results, are fused and output, to improve the interaction efficiency and improve the interaction effect of data, thereby improving the user experience.

In an embodiment, the step S100 includes:
in response to the at least one first response result not meeting the first preset condition, detecting whether the at least one second response result meets the second preset condition;
if the at least one second response result does not meet the second preset condition, outputting the first prompt information, and/or proceeding to step S200;
if the at least one second response result meets the second preset condition, outputting the second response result according to the preset output strategy.

In an embodiment, the first prompt information includes at least one of the following:
audio information;
image information;
text information.

In an embodiment, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

In an embodiment, the second response result not meeting the second preset condition includes at least one of the following:
the second response result not matching the second processing request;
the second response result not matching the information to be processed;
the second response result not matching the processing device;
the second target application or target service corresponding to the second response result not matching the information to be processed and/or the processing device;
the device that obtains and/or outputs the second response result not matching the information to be processed and/or the processing device.

For example, in a payment scenario, the first preset condition and the second preset condition are the same. For example, they may both be that the permission level of the application or service corresponding to the response result is higher than the preset level. The processing device responds to the first response result, for example, a car or TV responds with a parking fee bill that does not meet the first preset condition, and the second response result is, for example, a mobile phone responds with a parking fee bill that meets the preset condition, and the second response result is output. In response to the first response result not meeting the first preset condition and the second response result not meeting the second preset condition, the processing device outputs first prompt information, for example, "no authority".

In an embodiment, the processing method further includes:
detecting whether there is at least one associated device in the processing device. If there is at least one associated device in the processing device, step S300 is executed, and/or if there is not at least one associated device in the processing device, no processing is performed or the second prompt information is output.

In an embodiment, the step S300 includes:
step S3001a, outputting the first response result and/or the second response result to at least one associated device, and/or receiving the third response result output by the associated device. In an embodiment, the third response result is obtained after preset processing by the associated device; or
step S3001 b, receiving or determining or generating at least one third response result, and outputting the third response result to at least one associated device, so that the associated device performs preset processing on the third response result; or
step S3001 c, outputting the information to be processed to the associated device.

In an embodiment, before the step S300, the method further includes: determining at least one associated device according to the first response result and/or the second response result and/or the information to be processed and/or the operation information, and/or the scene in which the processing device is located.

In some embodiments, the processing device is connected to or within the same connected network as at least one device. When the processing device outputs the first response result and/or the second response result, or the third response result, the processing device needs to determine the associated device from at least one connected device. At this time, the processing device determines the associated device based on the matching relationship between the operation information and/or the information to be processed and/or the response result and other devices. Exemplarily, when the operation information is to select the sending device, if you click the icon position corresponding to the mobile phone displayed on the current interface of the processing device, the mobile phone is determined to be the associated device. For another example, in a smart home environment, when the user points the processing device (such as a mobile phone) to the refrigerator, the refrigerator is determined to be the associated device. For another example, when the third response result is a video file, the smart TV is determined to be the associated device based on the matching relationship between the video file and the smart TV.

In an embodiment, the determining or generating at least one third response result includes:
in response to the obtained second operation, processing the first response result and/or the second response result; and/or
obtaining the processing result of the third target application or target service based on the first response result and/or the second response result. In an embodiment, the third target application or target service is located in the processing device.

In an embodiment, the second operation includes at least one of the following:
confirming at least one second piece of data;
accessing the preset application and/or service;
operating a preset function button;
a preset gesture and/or a preset key operation;
a present voice instruction;
timeout and no response prompt information.

The third response result may be, but is not limited to, one of the first response result and the second response result, for example, the third response result may be the result of selecting one of the first response result and the second response result, can also be the result of processing the first response result or the second response result, and can also be the result of processing (such as sorting, fusion, replacement, etc.) of the first response result and the second response result. Exemplarily, if the first response result and the second response result are the response results obtained for the same processing request such as "translate hello", when the priority of the device that outputs the second response result is higher than the priority of the device that outputs the first response result, the second response result can be selected as the third response result for output. For another example, when the first response result and the second response result correspond to different processing requests split from the same information to be processed, such as "recommend nearby hotels" and "recommend nearby restaurants", after filtering the hotel information and restaurant information based on the current location and/or user ratings, etc., the filtered hotel information and restaurant information can be fused and output.

The processing method of the present application includes: when in response to at least one first response result not meeting the first preset condition, and/or, at least one second response result not meeting the second preset condition, outputting at least one processing request to cause at least one associated device to perform preset processing, which can make full use of the functions and interactive capabilities of the device and combine it with user interactive decision-making, which can not only improve the accuracy of the response results, but also improve the interactive effect. Thus, the interaction scenarios are not limited to the currently used applications or services, and the interaction is more flexible and smooth, improving the user experience. In addition, the response results can also be fused, which can reduce the number of user interactions, reduce the time and frequency of user interruptions, and further improve the user experience.

### Fourth embodiment

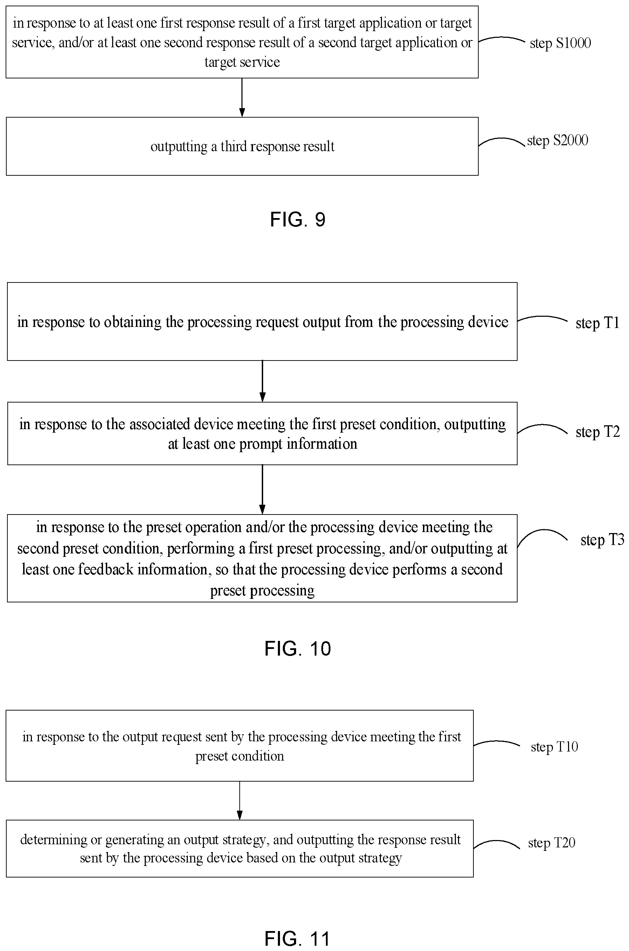

FIG. 9 is a schematic flowchart of a processing method according to the fourth embodiment. As shown in FIG. 9, a processing method of the present application is applied to a processing device, including:
step S1000, responding to at least one first response result of the first target application or target service, and/or at least one second response result of the second target application or target service;
step S2000, outputting a third response result. In an embodiment, the third response result is obtained by processing the first response result and/or the second response result by the associated device.

In an embodiment, at least one first response result is processed and/or output by at least one first target application or target service, at least one second response result is obtained and/or output by at least one second target application or target service, and at least one third response result is obtained and/or output by at least one third target application or target service. The first target application or target service may be located in the first device, and the second target application or target service may be located in the second device. At least one of the first target application or target service and the second target application or target service may also be located in the processing device. In an embodiment, at least one of the processing device, the first device, the second device, and the associated device may include terminal devices (such as mobile phones, tablets, etc.), wearable smart devices (such as smart watches, smart bracelets, smart headphones, etc.), smart home devices (such as smart TVs, smart speakers, etc.), Internet of Vehicles devices (such as smart cars, vehicle-mounted terminals, etc.). Applications or services may include human-computer interaction applications, and human-computer interaction applications include applications or services that can perform human-computer interaction through gestures, voice, air gestures, etc.

Exemplarily, when responding to at least one first response result and at least one second response result, for system-level human-computer interaction applications or security levels, and/or functions supported by human-computer interaction applications with higher trust levels, prioritize calling system-level human-computer interaction applications or human-computer interaction applications with higher security levels and/or trust levels in the associated devices, to obtain a third response result with a higher security level and/or trust level and/or higher matching degree. And/or, the third response result is output through the processing device serving as the control center. In this way, the functions and interaction capabilities of the device can be fully utilized, which can not only improve the accuracy of the response results, but also improve the interaction effect, making the interaction scenarios not limited to the current device, making the interaction more flexible and smooth, and improving the user experience.

In an embodiment, the step S1000 includes:
in response to the information to be processed, outputting the first processing request to the first target application or target service, and/or the second target application or target service;
receiving a first response result output by the first target application or target service, and/or receiving a second response result output by the second target application or target service.

Exemplarily, the first target application or target service may be selected according to, but is not limited to, the first selection strategy, for example, the target application or target service with the fastest response speed is selected. The second target application or target service may be, but is not limited to, selected according to the second selection strategy, for example, selecting a target application or target service that meets the trust level required for the information to be processed. In an embodiment, the first selection strategy and the second selection strategy can be automatically generated by the system based on the attributes of the information to be processed, or can be selected based on user selection instructions for prompt information.

In an embodiment, the step S1000 includes:
in response to the information to be processed, outputting the first processing request so that the first target application or target service obtains the first response result based on the first processing request; and
in response to at least one first response result not meeting the first preset condition, and/or the first operation meeting the second preset condition, and/or the processing device meeting the third preset condition, outputting the second processing request, so that the second target application or target service obtains a second response result.

In an embodiment, the information to be processed includes but is not limited to voice information, gesture information, body movements and other information or information after processing these information, such as, can be a control instruction obtained after processing voice information. The second processing request can be the same as the first processing request, or the second processing request can be complementary to the first processing request based on the information to be processed, or can be obtained separately based on two mutually related information to be processed. In an embodiment, the second processing request may also be obtained by processing the first response result based on the information to be processed. For example, when the information to be processed is content to be translated and includes a first language and a second language, the first processing request is a processing request for the first language, and the second processing request is a processing request for the second language. For another example, the information to be processed is the content to be translated, and the first processing information is a processing request for the content to be translated. If the first response result also includes partial information of the content to be translated, the second response result may be a processing request for this partial information.

In an embodiment, the first response result not meeting the first preset condition includes at least one of the following:
the first response result not matching the first processing request;
the first response result not matching the information to be processed;
the first response result not matching the processing device;
the first target application or target service corresponding to the first response result not matching the information to be processed and/or the processing device;
the device that obtains and/or outputs the first response result not matching the information to be processed and/or the processing device.

The first response result does not match the first processing request. For example, the first response result does not completely match or does not match the content of the first processing request. For example, the first processing request is "translate hello", and the first response result is "unrecognized". The first response result does not match the processing device. For example, the format of the first response result does not match the function of the processing device, the first response result does not match the operating state of the application of the processing device, the permission level of the first response result is higher than the permission level of the processing device, and the first response result does not match the scene in which the processing device is located. The first target application or target service does not match the information to be processed, for example, the trust level for the first target application or target service may be lower than the trust level required to process the information to be processed. The device that obtains and/or outputs the first response result does not match the information to be processed, for example, the device may not be in the scene and/or mode associated with the information to be processed, such as, in a specific time period, specific location, child mode, navigation mode, sleep mode, conference mode, connection state, etc.

In an embodiment, the first operation meeting the second preset condition includes at least one of the following:
the first operation is to confirm at least one first data information;
the first operation is to enter the default application and/or service;
the first operation is to operate the preset function button;
the first operation is a preset gesture and/or a preset key operation;
the first operation is the preset voice command;
the first operation is a timeout and no response prompt information;
the first operation is an operation at a preset position and/or a preset time period.

In an embodiment, the processing device meeting the third preset condition includes at least one of the following:
the account used to log in to the processing device is the preset account;
the processing device is in a preset mode or scene;
the processing device has a preset function;
the state of the processing device application meets the preset state;
the permission of the processing device meets the preset permission;
the power of the processing device meets the preset power;
the network state of the processing device meets the preset network state.

In an embodiment, outputting the second processing request includes:
determining key information in response to the second processing request;
determining the second target application or target service according to the key information, such that the second target application or target service responds based on the key information.

In an embodiment, the key information includes at least one of the location of the processing object in the second processing request, the triggering location, the processing time, the source application, and the target application category. By preliminary processing the second processing request, at least one of the location of the processing object in the second processing request, triggering location, the processing time, the source application, and the target application can be determined. For example, the human-computer interaction application A outputs the second processing request "turn on the air conditioner in the living room", it can be determined that the location of the processing object is the living room, the trigger time is the time when the voice information is input, the processing time is now, the source application is the human-computer interaction application A, and the target application category is the air-conditioning application. In this way, at least one of the air conditioning applications can be determined as the second target application or target service, and a response can be made based on key information, such as processing time.

In an embodiment, the second response result may be obtained by processing the second target application or target service based on the second processing request when the first response result does not meet the first preset condition. It may also be that after the information to be processed is split into the first processing information and the second processing information, when the first response result is obtained in response to the first processing information, the second response result is obtained in response to the second processing information.

In one scenario, the first target application or target service can first process the information to be processed, for example, process the language to be translated to obtain the first response result. Then, the second target application or target service translates the first response result again to obtain the second response result, and then outputs the second response result, to improve the accuracy of the data, improve the interactive effect of the data, thereby improving the user experience.

In another scenario, the first target application or target service can process the first processing information while the second target application or target service processes the second processing information, and then the first response result and the second response result, such as the translation results, are fused and output, to improve the interaction efficiency and improve the interaction effect of data, thereby improving the user experience.

In an embodiment, the step S1000 includes:
in response to the at least one first response result not meeting the first preset condition, detecting whether the at least one second response result meets the second preset condition;
if the at least one second response result does not meet the second preset condition, outputting the first prompt information, and/or proceeding to step S2000;
if the at least one second response result meets the second preset condition, outputting the second response result according to the preset output strategy.

In an embodiment, the processing method further includes:
detecting whether there is at least one associated device in the processing device. If there is at least one associated device in the processing device, step S2000 is executed, and/or if there is not at least one associated device in the processing device, no processing is performed or the second prompt information is output.

In an embodiment, before step 2000b, the processing method further includes: determining at least one associated device according to the first response result, and/or the second response result, and/or the information to be processed and/or the operation information, and/or the scene in which the processing device is located.

In some embodiments, the processing device is connected to or within the same connected network as at least one device. When the processing device outputs the first response result and/or the second response result, or the third response result, the processing device needs to determine the associated device from at least one connected device. At this time, the processing device determines the associated device based on the matching relationship between the operation information and/or the information to be processed and/or the response result and other devices. Exemplarily, when the operation information is to select the sending device, if you click the icon position corresponding to the mobile phone displayed on the current interface of the processing device, the mobile phone is determined to be the associated device. For another example, in a smart home environment, when the user points the processing device (such as a mobile phone) to the refrigerator, the refrigerator is determined to be the associated device. For another example, when the third response result is a video file, the smart TV is determined to be the associated device based on the matching relationship between the video file and the smart TV.

In an embodiment, the third response result being obtained through processing the first response result and/or the second response result by the associated device includes at least one of the following:
the associated device responds to the editing operation and the third response result is obtained after processing the first response result and/or the second response result;
the associated device responds to the processing request, wakes up or runs the third target application or target service, and processes the first response result and/or the second response result to obtain the third response result;
the associated device responds to the preset operation, outputs the first response result and/or the second response result to the intermediate device, and/or receives the third response result output by the intermediate device.

In an embodiment, the step S2000 includes:
detecting whether the third response result meets the preset output condition;
when the third response result meets the preset output condition, outputting the third response result; and/or
when the third response result does not meet the preset output condition, preprocessing the third response result.

In an embodiment, the preset output condition includes at least one of the following:
the third response result matching the content of the information to be processed;
the third response result matching the function of the processing device, and/or the currently running application, and/or the permission level;
the third response result matching the preset scene.

In an embodiment, the preset processing includes at least one of the following:
outputting after processing;
outputting prompt information and outputting according to the selection operation;
processing and/or outputting based on control information from other devices.

The present application provides a processing method. When responding to at least one first response result and/or at least one second response result, at least one associated device processes to obtain a third response result according to the first response result and/or the second response result. It can make full use of the functions and interactive capabilities of the device and combine it with user interactive decision-making, which can not only improve the accuracy of the response results, but also improve the interactive effect, and makes the interaction scenario not limited to the currently used device, making the interaction more flexible and smooth, and improving the user experience.

### Fifth embodiment

FIG. 10 is a schematic flowchart of a processing method according to the fifth embodiment. As shown in FIG. 10, a processing method of the present application is applied to an associated device, including:
step T1, in response to obtaining the processing request output from the processing device;
step T2, in response to the associated device meeting the first preset condition, outputting at least one prompt information; and
step T3, in response to the preset operation and/or the processing device meeting the second preset condition, performing a first preset processing, and/or outputting at least one feedback information, so that the processing device performs a second preset processing.

Exemplarily, for example, in the scenario where the processing device is the control center, the processing device responds to the trigger event and outputs the processing request to the associated device. When the associated device meets the first preset condition, for example, when it has the function corresponding to the processing request, it outputs a prompt information, for example, "the search function has been turned on". When the associated device receives a preset operation, such as a user's confirmation instruction, and/or the processing device has control authority, it will perform search processing according to the processing request. And/or, when the confirmation instruction is not received or the response fails, feedback information is output so that the processing device re-outputs the processing request to other devices.

In an embodiment, the processing device may, but is not limited to in response to at least one first response result not meeting the first preset condition, and/or at least one second response result not meeting the second preset condition, and/or the acquired operation meeting the third preset condition, and/or the processing device meeting the fourth preset condition, and/or in response to the triggering event, outputting the processing request.

In an embodiment, the first response result is obtained and/or output by at least one first target application or target service, and the second response result is obtained and/or output by at least one second target application or target service. The first target application or target service may be located in the first device, and the second target application or target service may be located in the second device. Or, at least one of the first target application or target service and the second target application or target service may also be located in the processing device.

In an embodiment, in the step T2, the first preset condition may include at least one of the following:
the logged in account being the preset account;
in a preset mode or scene;
having a preset function;
the state of the application meets the present state;
the permission meeting the preset permission;
the power meeting the preset power level;
the network state meeting the preset network state.

In an embodiment, in the step T3, the obtained operation may include at least one of the following:
confirming at least one piece of data;
accessing a preset application and/or service;
operating a preset function button;
a preset gesture and/or a preset key operation;
a preset voice command;
timeout and no response prompt information.

In an embodiment, in the step T3, the second preset condition may include at least one of the following:
the logged in account being the preset account;
in a preset mode or scene;
having a preset function;
the state of the application meets the present state;
the permission meeting the preset permission;
the power meeting the preset power level;
the network state meeting the preset network state.

In an embodiment, in the step T3, performing the first preset processing includes:
in response to receiving a processing request including a first response result and/or a second response result, performing a first preset processing on the first response result and/or the second response result to output a third response result; or
in response to receiving a processing request including information to be processed, performing a first preset processing on the information to be processed to output a first response result and/or a second response result.

The third response result may be, but is not limited to, one of the first response result and the second response result, for example, the third response result may be the result of selecting one of the first response result and the second response result, can also be the result of processing the first response result or the second response result, and can also be the result of processing (such as sorting, fusion, replacement, etc.) of the first response result and the second response result. Exemplarily, if the first response result and the second response result are the response results obtained for the same processing request such as "translate hello", when the priority of the device that outputs the second response result is higher than the priority of the device that outputs the first response result, the second response result can be selected as the third response result for output. For another example, when the first response result and the second response result correspond to different processing requests split from the same information to be processed, such as "recommend nearby hotels" and "recommend nearby restaurants", after filtering the hotel information and restaurant information based on the current location and/or user ratings, etc., the filtered hotel information and restaurant information can be fused and output.

In an embodiment, in the step T3, outputting at least one feedback information to enable the processing device to perform second preset processing includes:
in response to the detection information of the acquired first response result and/or the second response result, outputting the detection result to the processing device; and
in response to the obtained response result, outputting the response result to the processing device, so that the processing device performs second preset processing on the response result. The response result is at least one of the first response result, the second response result, and the third response result.

In an embodiment, the detection result may include, but is not limited to:
whether the first response result and/or the second response result meets the preset condition.

In an embodiment, the first response result and/or the second response result not meeting the first preset condition includes at least one of the following:
the result not matching the processing request;
not matching the information to be processed;
not matching the associated device;
not matching the information to be processed;
the device that obtains and/or outputs the first response result not matching the information to be processed and/or the associated device.

The response result does not match the processing request. For example, the response result does not exactly match the content of the processing request. For example, the processing request is "translate hello" and the response result is "unrecognized". The response result does not match the associated device. For example, the format of the response result does not match the function of the associated device.

In an embodiment, the second preset processing includes at least one of the following:
transmitting through a preset transmission path;
processing through a preset device;
processing through a preset target application or target service;
outputting through a preset device;
outputting through a preset scene;
processing or outputting in a preset scene.

Exemplarily, in a driving scenario, for example, if the processing device receives a first response result and a second response result, the first response result is a video signal, and the second response result is an audio signal, the processing device selects the audio signal as the information to be output. For another example, the processing device receives a first response result and a second response result. The first response result is "Red wine has been paid for 100 yuan", and the second response result is "Shrimp has been bought". When there are other users in the car, the second response result and the second response result are processed to obtain the third response result, and the third response result is broadcast using voice. For example, "Red wine has been paid, shrimp has been bought", and then the text on the mobile phone is controlled to display "Red wine has been paid for 100 yuan".

The present application provides a processing method, including: in response to the processing request obtained from the processing device output; in response to the associated device meeting the first preset condition, outputting at least one prompt information; in response to the preset operation and/or the processing device meeting the second preset condition, performing the first preset processing, and/or outputting at least one feedback information to cause the processing device to perform the second preset processing. It can make full use of the functions and interaction capabilities of the device and combine it with user interaction decision-making, which can not only improve the accuracy of response results, but also ensure user privacy, improve interaction security, and enhance interaction effects. This makes the interaction scenarios not limited to the currently used applications or services, making the interaction more flexible, smooth, and safer, and improving the user experience. In addition, the response results can also be fused, which can reduce the number of user interactions, reduce the time and frequency of user interruptions, and further improve the user experience.

### Sixth embodiment

FIG. 11 is a schematic flowchart of a processing method according to the sixth embodiment. As shown in FIG. 11, a processing method of the present application is applied to an associated device, including:
step T10, in response to the output request sent by the processing device meeting the first preset condition; and
step T20, determining or generating an output strategy, and outputting the response result sent by the processing device based on the output strategy.

Exemplarily, in a navigation scenario, a processing device, such as a mobile phone, responds to a trigger event, outputs a processing request, such as a navigation information playback request, to an associated device (such as a headphone), and responds to the output request meeting the first preset condition. For example, the output request does not conflict with the application running on the associated device, determines the output strategy, such as playback volume, and outputs response results, such as navigation information.

In an embodiment, the first preset condition includes at least one of the following:
the processing device having a preset permission;
the processing device being in a preset scene;
the processing device being not a control center;
the output request being a request of a preset type;
the output request being a request of a preset function.

In an embodiment, the response result may be, but is not limited to, the first response result obtained by the first target application or target service, and/or the second response result obtained by the second target application or target service, and/or the third response result obtained by the third target application or target service. The third response result is obtained based on the first response result and/or the second response result.

In an embodiment, the output strategy includes at least one of the following:
selecting at least one response result to be output according to the information selection strategy;
selecting at least one output device according to the device selection strategy;
selecting at least one response result to be output and/or the output sequence of at least one output device according to the sequence selection strategy;
the output form and/or the output time and/or the output scene.

In an embodiment, selecting at least one response result to be output and/or the output sequence of at least one output device according to the sequence selection strategy includes:
selecting at least one response result to be output and/or the output sequence of at least one output device according to the attributes of at least one response result to be output and/or the content of at least one response result to be output and/or the scene in which the processing device is located.

Exemplarily, in a driving scenario, for example, if the information to be processed is "Let's get some entertainment", the first response result is a video signal, and the second response result is an audio signal, then the audio signal is selected as the information to be output. For another example, if the information to be processed is "Buy a bottle of red wine on JD.com and some shrimps on Meituan", the first response result is "100 yuan has been paid for the red wine", and the second response result is "The shrimps have been bought". When there are other users in the car, the second response result and the second response result are processed to obtain the third response result, and the third response result is broadcast using voice, for example, "Red wine has been paid, shrimp has been bought", and then the text displays "Red wine has been paid for 100 yuan".

The processing method of the present application includes: in response to the output request sent by the processing device meeting the first preset condition; determining or generating an output strategy, and outputting the response result sent by the processing device based on the output strategy, which can make full use of the functions and interactive capabilities of the device and combine it with user interactive decision-making, and can not only improve the accuracy of the response results, but also improve the interactive effect, such that the interaction scenarios are not limited to the currently used applications or services, and the interaction is more flexible and smooth, improving the user experience. In addition, the response results can also be fused, which can reduce the number of user interactions, reduce the time and frequency of user interruptions, and further improve the user experience.

### Seventh embodiment

Embodiments of the present application further provide a processing method, applied to a processing device, including:
step S1, in response to at least one first response result not meeting the first preset condition, the first response result being processed and/or output by at least one first target application or target service;
step S2, obtaining at least one second response result, the second response result being processed and/or output by at least one second target application or target service;
step S3, processing at least one first response result and/or at least one second response result according to a preset processing strategy and/or outputting according to a preset output strategy.

In an embodiment, the step S1 includes:
step S11, in response to information to be processed, outputting a first processing request, so that the first target application or target service obtains the first response result based on the first processing request;
step S12, in response to the first response result not meeting the first preset condition, and/or a first operation meeting a second preset condition, and/or, the processing device meeting a third preset condition, outputting a second processing request, so that the second target application or target service obtains the second response result.

In an embodiment, processing according to the preset processing strategy includes:
processing the first response result according to the first preset processing strategy; and/or,
processing the second response result according to a second preset processing strategy.

In an embodiment, the step S3 includes:
detecting whether the second response result meets a fourth preset condition, and/or whether the processing device meets a fifth preset condition, if not, processing at least one first response result and/or at least one second response result according to a preset processing strategy, and/or, if yes, outputting at least one first response result and/or at least one second response result according to a preset output strategy.

In an embodiment, processing at least one first response result and/or at least one second response result according to the preset processing strategy includes:
outputting the first response result and/or the second response result to at least one associated device, and/or receiving a third response result output by the associated device; or
determining or generating at least one third response result, and/or outputting the third response result to at least one associated device.

In an embodiment, determining or generating at least one third response result includes:
in response to the obtained second operation, processing the first response result and/or the second response result; and/or
obtaining the processing result of the third target application or target service based on the first response result and/or the second response result.

In an embodiment, the preset output strategy includes at least one of the following:
selecting at least one response result to be output according to the information selection strategy;
selecting at least one output device according to the device selection strategy;
selecting at least one response result to be output and/or the output sequence of at least one output device according to the sequence selection strategy;
the output form and/or the output time and/or the output scene.

In an embodiment, selecting at least one response result to be output and/or the output sequence of at least one output device according to the sequence selection strategy includes:
selecting at least one response result to be output and/or the output sequence of at least one output device according to the attributes of at least one response result to be output and/or the content of at least one response result to be output and/or the scene in which the processing device is located.

The processing method of this embodiment makes full use of the functions and response results of different applications or services, improves the accuracy and/or interaction effect and/or security of the response results, and improves the user experience. In addition, the response results can also be fused, which can reduce the number of user interactions, reduce the time and frequency of user interruptions, and further improve the user experience.

### Eighth embodiment

Embodiments of the present application further provide a processing method, applied to a processing device, including:
step S1, in response to at least one first response result meeting the first preset condition, the first response result being processed and/or output by at least one first target application or target service; and
step S2, processing at least one first response result and/or at least one second response result according to a preset processing strategy and/or outputting the at least one first response result and/or the at least one second response result according to a preset output strategy, the second response result being processed and/or output by at least one second target application or target service.

In an embodiment, the step S1 includes:
step S11, in response to the information to be processed, outputting a first processing request, so that the first target application or target service obtains the first response result based on the first processing request; and
step S12, in response to the first response result not meeting the first preset condition, and/or the first operation meeting the second preset condition, and/or the processing device meeting the third preset condition, outputting the second processing request, so that the second target application or target service obtains a second response result.

In an embodiment, processing the at least one first response result and/or the at least one second response result according to the preset processing strategy includes:
processing the first response result according to the first preset processing strategy; and/or
processing the second response result according to a second preset processing strategy.

In an embodiment, the step S3 includes:
detecting whether the second response result meets a fourth preset condition, and/or whether the processing device meets a fifth preset condition, if not, processing at least one first response result and/or at least one second response result according to a preset processing strategy, and/or, if yes, outputting at least one first response result and/or at least one second response result according to a preset output strategy.

In an embodiment, processing the at least one first response result and/or the at least one second response result according to the preset processing strategy includes:
outputting the first response result and/or the second response result to at least one associated device, and/or receiving a third response result output by the associated device; or
determining or generating at least one third response result, and/or outputting the third response result to at least one associated device.

In an embodiment, determining or generating at least one third response result includes:
in response to the obtained second operation, processing the first response result and/or the second response result; and/or
obtaining the processing result of the third target application or target service based on the first response result and/or the second response result.

In an embodiment, the preset output strategy includes at least one of the following:
selecting at least one response result to be output according to the information selection strategy;
selecting at least one output device according to the device selection strategy;
selecting at least one response result to be output and/or the output sequence of at least one output device according to the sequence selection strategy;
the output form and/or the output time and/or the output scenario.

In an embodiment, selecting at least one response result to be output and/or the output sequence of at least one output device according to the sequence selection strategy includes:
selecting at least one response result to be output and/or an output sequence of at least one output device according to the attributes of at least one response result to be output and/or the content of at least one response result to be output and/or the scene in which the processing device is located.

The processing method of this embodiment makes full use of the functions and response results of different applications or services, improves the accuracy and/or interaction effect and/or security of the response results, and improves the user experience. In addition, the response results can also be fused, which can reduce the number of user interactions, reduce the time and frequency of user interruptions, and further improve the user experience.

### Ninth embodiment

Embodiments of the present application further provide a processing method, applied to a processing device, including:
step S100, in response to at least one first response result not meeting the first preset condition and the acquired operation meeting the third preset condition;
step S200, in response to the processing device meeting the fourth preset condition, and/or, at least one second response result not meeting the second preset condition;
step S300, outputting at least one processing request so that at least one associated device performs preset processing.

In an embodiment, the step S100 further includes:
in response to the at least one first response result not meeting the first preset condition, detecting whether the at least one second response result meets the second preset condition;
if not, outputting the first prompt information, and/or proceeding to step S200; and/or, if yes, processing the second response result according to a preset processing strategy and outputting the second response result, or outputting the second response result according to an output strategy.

In an embodiment, the step S300 includes:
step S3001a, outputting the first response result and/or the second response result to at least one associated device, and/or receiving the third response result output by the associated device; or
step S3001b, receiving or determining or generating at least one third response result, and outputting the third response result to at least one associated device, so that the associated device performs preset processing on the third response result; or
step S3001c, outputting the information to be processed to the associated device.

In an embodiment, in step S3001b, determining or generating at least one third response result includes:
in response to the obtained operation, processing the first response result and/or the second response result; and/or
obtaining the processing result of the third target application or target service based on the first response result and/or the second response result.

In an embodiment, the processing method further includes:
detecting whether there is at least one associated device in the processing device. If there is at least one associated device in the processing device, step S300 is executed, and/or if there isn't at least one associated device in the processing device, no processing is performed or the second prompt information is output.

The processing method of this embodiment can make full use of the functions and interaction capabilities of the device and combine it with user interaction decision-making, which can not only improve the accuracy of response results, but also improve the interaction effect, so that the interaction scenario is not limited to the currently used application or service, the interaction is more flexible and smooth, and the user experience is improved. In addition, the response results can also be fused, which can reduce the number of user interactions, reduce the time and frequency of user interruptions, and further improve the user experience.

### Tenth embodiment

Embodiments of the present application further provide a processing method, applied to a processing device, including:
step S100, in response to at least one first response result not meeting the first preset condition and the processing device meeting the fourth preset condition;
step S200, outputting at least one processing request so that at least one associated device performs preset processing.

In an embodiment, the step S100 includes:
in response to the at least one first response result not meeting the first preset condition, detecting whether the at least one second response result meets the second preset condition;
if the at least one second response result does not meet the second preset condition, outputting the first prompt information, and/or proceeding to step S200; and/or, if the at least one second response result meets the second preset condition, processing the second response result according to the preset processing strategy and outputting the second response result, or outputting the second response result according to the output strategy.

In an embodiment, the step S200 includes:
step S2001a, outputting the first response result and/or the second response result to at least one associated device, and/or receiving the third response result output by the associated device; or
step S2001b, receiving or determining or generating at least one third response result, and outputting the third response result to at least one associated device, so that the associated device performs preset processing on the third response result; or
step S2001c, outputting the information to be processed to the associated device.

In an embodiment, in step S2001b, determining or generating at least one third response result includes:
in response to the obtained operation, processing the first response result and/or the second response result; and/or
obtaining the processing result of the third target application or target service based on the first response result and/or the second response result.

In an embodiment, the processing method further includes:
detecting whether there is at least one associated device in the processing device. If there is at least one associated device in the processing device, step S200 is executed, and/or if there isn't at least one associated device in the processing device, no processing is performed or the second prompt information is output.

The processing method of this embodiment can make full use of the functions and interaction capabilities of the device and combine it with user interaction decision-making, which can not only improve the accuracy of response results, but also improve the interaction effect, so that the interaction scenario is not limited to the currently used application or service, the interaction is more flexible and smooth, and the user experience is improved. In addition, the response results can also be fused, which can reduce the number of user interactions, reduce the time and frequency of user interruptions, and further improve the user experience.

### Eleventh embodiment

Embodiments of the present application further provide a processing method, applied to a processing device, including:
step S1000, in response to at least one first response result of the first target application or target service, and/or at least one second response result of the second target application or target service;
step S2000, outputting a third response result, which is obtained through processing the first response result and/or the second response result by the processing device and/or the associated device.

In an embodiment, the third response result being obtained through processing the first response result and/or the second response result by the processing device and/or the associated device includes at least one of the following:
the third response result being obtained through processing the first response result and/or the second response result by the processing device;
the third response result being obtained through processing the first response result and/or the second response result by at least one associated device;
the third response result being obtained through processing the first response result and/or the second response result by the processing device and at least one associated device.

In an embodiment, the step S1000 includes:
in response to the information to be processed, outputting the first processing request to the first target application or target service, and/or the second target application or target service;
receiving a first response result output by the first target application or target service, and/or receiving a second response result output by the second target application or target service.

In an embodiment, the step S1000 includes:
in response to the information to be processed, outputting the first processing request so that the first target application or target service obtains the first response result based on the first processing request;
in response to at least one first response result not meeting the first preset condition, and/or the first operation meeting the second preset condition, and/or the processing device meeting the third preset condition, outputting the second processing request, so that the second target application or target service obtains a second response result.

In an embodiment, the step S1000 includes:
in response to the at least one first response result not meeting the first preset condition, detecting whether the at least one second response result meets the second preset condition;
if the at least one second response result does not meet the second preset condition, outputting the first prompt information, and/or proceeding to step S2000; and/or
if at least one second response result meets the second preset condition, processing the second response result according to a preset processing strategy and outputting the second response result, or outputting the second response result according to an output strategy.

In an embodiment, before the step S2000, the processing method further includes:
determining at least one associated device according to the first response result and/or the second response result and/or the information to be processed and/or the operation information and/or the scene in which the processing device is located.

In an embodiment, in the step S2000, the third response result being obtained through processing the first response result and/or the second response result by the associated device includes at least one of the following:
in response to the editing operation, the associated device obtains the third response result after processing the first response result and/or the second response result;
in response to the processing request, the associated device wakes up or runs the third target application or target service, and processes the first response result and/or the second response result to obtain the third response result;
in response to the preset operation, the associated device outputs the first response result and/or the second response result to the intermediate device, and/or receives the third response result output by the intermediate device.

In an embodiment, the step S2000 includes:
detecting whether the third response result meets the preset output condition;
when the third response result meets the preset output condition, outputting the third response result; and/or
when the third response result does not meet the preset output condition, preprocessing the third response result.

The processing method of this embodiment can make full use of the functions and interaction capabilities of the device and combine it with user interaction decision-making, which can not only improve the accuracy of the response results, but also improve the interaction effect. This makes the interaction scenario not limited to the currently used device, making the interaction more flexible and smooth, and improving the user experience.

The present application further provides a terminal device. The terminal device includes a memory and a processor, and a processing program is stored on the memory. When the processing program is executed by the processor, the steps of the processing method in any of the above embodiments are implemented.

The present application further provides a computer-readable storage medium. A processing program is stored on the computer-readable storage medium. When the processing program is executed by the processor, the steps of the processing method in any of the above embodiments are implemented.

The embodiments of the terminal device and the computer-readable storage medium provided by the present application include all technical features of each embodiment of the above processing method. The expansion and explanation contents of the description are basically the same as those of the above-mentioned method embodiments, and will not be described again here.

Embodiments of the present application further provide a computer program product. The computer program product includes computer program code. When the computer program code is run on the computer, the computer is caused to perform the methods in the above various possible implementations.

Embodiments of the present application further provide a chip, which includes a memory and a processor. The memory is used to store a computer program. The processor is used to call and run the computer program from the memory, so that the device equipped with the chip executes the methods in the above various possible implementations.

It can be understood that the above scenarios are only examples and do not constitute a limitation on the application scenarios of the technical solutions provided by the embodiments of the present application. The technical solution of the present application can also be applied to other scenarios. For example, those of ordinary skill in the art know that with the evolution of system architecture and the emergence of new business scenarios, the technical solutions provided in the embodiments of the present application are also applicable to similar technical problems.

The above serial numbers of the embodiments of the present application are only for description and do not represent the advantages and disadvantages of the embodiments.

The steps in the methods of the embodiments of the present application can be sequentially adjusted, combined, and deleted according to actual needs.

The units in the equipment of the embodiments of the present application can be merged, divided, and deleted according to actual needs.

In the present application, the same or similar terms, concepts, technical solutions and/or application scenario descriptions are generally described in detail only the first time they appear. When it appears again later, for the sake of brevity, it is generally not repeated. When understanding the technical solutions and other content of the present application, the same or similar term concepts, technical solutions and/or application scenario descriptions that are not described in detail later can refer to the relevant previous detailed descriptions.

In the present application, each embodiment is described with its own emphasis. For parts that are not detailed or recorded in a certain embodiment, please refer to the relevant descriptions of other embodiments.

The technical features of the technical solution of the present application can be combined in any way. To simplify the description, all possible combinations of the technical features in the above embodiments are not described. However, as long as there is no contradiction in the combination of these technical features, it should be considered to be within the scope of the present application.

Through the above description of the implementation, those skilled in the art can clearly understand that the above embodiment methods can be implemented by software plus the necessary general hardware platform, or by hardware, but in many cases the former is a better implementation. Based on this understanding, the technical solution of the present application essentially or the part that contributes to the existing technology can be embodied in the form of a software product, and the computer software product is stored in one of the above storage media (such as ROM/RAM, disk, optical disk), including several instructions to cause a terminal device (which can be a mobile phone, a computer, a server, a controlled terminal, or a network device, etc.) to execute the method of each embodiment of the present application.

In the above embodiments, it can be implemented in whole or in part by software, hardware, firmware, or any combination thereof. When implemented using software, it may be implemented in whole or in part in the form of a computer program product. A computer program product includes one or more computer instructions. When computer program instructions are loaded and executed on a computer, processes or functions according to embodiments of the present application are generated in whole or in part. The computer may be a general purpose computer, a special purpose computer, a computer network, or other programmable device. Computer instructions may be stored in or transmitted from one computer-readable storage medium to another computer-readable storage medium. For example, computer instructions may be transmitted from one website site, computer, server or data center to another website site, computer, server or data center by wired (e.g., coaxial cable, fiber optic, digital subscriber line) or wireless means. Computer-readable storage media can be any available media that can be accessed by a computer or a data storage device such as a server, data center, or other integrated media that contains one or more available media. Available media may be magnetic media (e.g., floppy disk, storage disk, tape), optical media (e.g., DVD), or semiconductor media (e.g., Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

### Industrial applicability

The processing method, the terminal device and the storage medium of the present application perform preset processing on the first response result and the second response result after obtaining the response result. After obtaining the response result, the accuracy and/or interaction effect of the response result can be improved, thereby improving the user experience.

## Claims

1. A processing method, applied to a processing device, **characterized by** comprising:
step S1, in response to at least one first response result not meeting a first preset condition;
step S2, obtaining at least one second response result; and
step S3, preprocessing the at least one first response result and the at least one second response result;
the step S3 comprises:
step S31, processing the at least one first response result and the at least one second response result according to a preset processing strategy; and/or
step S32, outputting the at least one first response result and the at least one second response result according to a preset output strategy.

2. The processing method according to claim 1, wherein:
the first response result is processed and/or output by at least one first target application or target service; and/or
the second response result is processed and/or output by at least one second target application or target service.

3. The processing method according to claim 2, wherein the step S1 comprises:
step S11, in response to information to be processed, outputting a first processing request, so that the first target application or target service obtains the first response result based on the first processing request;
step S12, in response to the first response result not meeting the first preset condition, and/or a first operation meeting a second preset condition, and/or, the processing device meeting a third preset condition, outputting a second processing request, so that the second target application or target service obtains the second response result.

4. The processing method according to any one of claims 1 to 3, wherein the step S31 comprises:
processing the first response result according to a first preset processing strategy; and/or
processing the second response result according to a second preset processing strategy.

5. The processing method according to any one of claims 1 to 3, wherein the step S3 comprises:
detecting whether the second response result meets a fourth preset condition, and/or whether the processing device meets a fifth preset condition,
in response to the second response result not meeting the fourth preset condition and the processing device not meeting the fifth preset condition, proceeding to step S31, and/or in response to the second response result meeting the fourth preset condition or the processing device meeting the fifth preset condition, proceeding to step S32.

6. The processing method according to any one of claims 1 to 3, wherein the step S31 comprises:
step S31a, outputting the first response result and/or the second response result to at least one associated device, and/or receiving a third response result output by the associated device; or
step S31b, determining or generating at least one third response result, and/or outputting the third response result to at least one associated device.

7. The processing method according to claim 6, wherein in the step S31b, the determining or generating at least one third response result comprises:
in response to obtaining a second operation, processing the first response result and/or the second response result; and/or
obtaining a processing result of a third target application or target service based on the first response result and/or the second response result.

8. The processing method according to any one of claims 1 to 3, wherein the step S3 comprises: outputting the response result to be output according to the preset output strategy;
the preset output strategy comprises at least one of the following:
selecting at least one response result to be output according to an information selection strategy;
selecting at least one output device according to a device selection strategy;
selecting at least one response result to be output and/or an output sequence of at least one output device according to a sequence selection strategy;
output form and/or output time and/or output scene.

9. The processing method according to claim 8, wherein the selecting at least one response result to be output and/or the output sequence of at least one output device according to the sequence selection strategy comprises:
selecting the at least one response result to be output and/or the output sequence of the at least one output device according to an attribute of the at least one response result to be output and/or a content of the at least one response result to be output and/or a scene in which the processing device is located.

10. A processing method, applied to a processing device, **characterized by** comprising:
step S10, obtaining at least one first response result and/or at least one second response result; and
step S20, detecting whether the first response result and/or the second response result meets a preset condition, in response to the first response result and/or the second response result not meeting the preset condition, processing the first response result and/or the second response result according to a preset processing strategy; and/or in response to the first response result and/or the second response result meeting the preset condition, outputting the first response result and/or the second response result according to a preset output strategy;
the step S20 comprises:
detecting whether the first response result meets the preset condition;
in response to the first response result meeting the preset condition, outputting the first response result according to the preset output strategy; and/or
in response to the first response result not meeting the preset condition, detecting whether the second response result meets the preset condition, in response to the second response result meeting the preset condition, outputting the second response result according to the preset output strategy; and/or, in response to the second response result not meeting the preset condition, processing the second response result according to the preset processing strategy;
or the step S20 comprises:
detecting whether the first response result meets a first preset condition;
in response to the first response result meeting the first preset condition, detecting whether the second response result meets a second preset condition;
in response to the second response result meeting the second preset condition, outputting the first response result and the second response result according to the preset output strategy; and/or, in response to the second response result not meeting the second preset condition, outputting a second processing request to at least one associated device, so that the associated device outputs a third response result, in response to the third response result meeting the second preset condition, outputting the first response result and the third response result according to the preset output strategy.

11. The processing method according to claim 10, wherein:
the first response result is processed and/or output by at least one first target application or target service;
the second response result is processed and/or output by at least one second target application or target service.

12. The processing method according to claim 11, wherein the step S10 comprises:
step S101, in response to information to be processed, outputting a first processing request to the first target application or target service and the second target application or target service; and
step S102, receiving a first response result output by the first target application or target service, and/or receiving a second response result output by the second target application or target service.

13. The processing method according to any one of claims 10 to 12, wherein processing the first response result and/or the second response result according to the preset processing strategy comprises:
outputting prompt information, and in response to a first operation, processing the first response result and/or the second response result according to the preset processing strategy; and/or
outputting the processing request to the associated device so that the associated device performs preset processing; and/or
receiving or generating or determining at least one third response result.

14. The processing method according to claim 13, wherein the receiving or generating or determining the at least one third response result comprises:
outputting the first response result and/or the second response result to at least one associated device, and/or receiving a third response result output by the associated device; or
determining or generating at least one third response result, and/or outputting the third response result to at least one associated device.

15. The processing method according to claim 14, wherein the determining or generating the at least one third response result comprises:
in response to obtaining a second operation, processing the first response result and/or the second response result; and/or
obtaining a processing result of a third target application or target service based on the first response result and/or the second response result.

16. The processing method according to any one of claims 10 to 12, wherein in the step S20, the preset output strategy comprises at least one of the following:
selecting at least one response result to be output according to an information selection strategy;
selecting at least one output device according to a device selection strategy;
selecting at least one response result to be output and/or an output sequence of at least one output device according to a sequence selection strategy;
output form and/or output time and/or output scene.

17. The processing method according to claim 16, wherein the selecting at least one response result to be output and/or the output sequence of at least one output device according to the sequence selection strategy comprises:
selecting the at least one response result to be output and/or the output sequence of the at least one output device according to an attribute of the at least one response result to be output and/or a content of the at least one response result to be output and/or a scene in which the processing device is located.

18. A processing method, applied to a processing device, **characterized by** comprising:
step S100, in response to at least one first response result not meeting a first preset condition, and/or at least one second response result not meeting a second preset condition;
step S200, in response to an acquired operation meeting a third preset condition, and/or the processing device meeting a fourth preset condition; and
step S300, outputting at least one processing request so that at least one associated device performs preset processing.

19. The processing method according to claim 18, wherein the step S100 comprises:
in response to the at least one first response result not meeting the first preset condition, detecting whether the at least one second response result meets the second preset condition;
in response to the at least one second response result not meeting the second preset condition, outputting first prompt information, and/or proceeding to step S200; and/or, in response to the at least one second response result meeting the second preset condition, processing the second response result according to the preset processing strategy and then output, or outputting the second response result according to the output strategy.

20. The processing method according to claim 18, wherein the step S300 comprises:
step S3001a, outputting the first response result and/or the second response result to at least one associated device, and/or receiving a third response result output by the associated device; or
step S3001b, receiving or determining or generating at least one third response result, and outputting the third response result to at least one associated device, so that the associated device performs preset processing on the third response result; or
step S3001c, outputting information to be processed to the associated device.

21. The processing method according to claim 20, wherein in the step S3001b, the determining or generating the at least one third response result comprises:
in response to an acquired operation, processing the first response result and/or the second response result; and/or
obtaining a processing result of a third target application or target service based on the first response result and/or the second response result.

22. The processing method according to any one of claims 18 to 21, further comprising:
detecting whether there is at least one associated device in the processing device; and
when there is the at least one associated device in the processing device, performing the step S300, and/or when there isn't the at least one associated device in the processing device, performing no processing or outputting second prompt information.

23. A processing method, applied to a processing device, **characterized by** comprising:
step S1000, in response to at least one first response result of a first target application or target service, and/or at least one second response result of a second target application or target service; and
step S2000, outputting a third response result, the third response result being obtained through processing the first response result and/or the second response result by an associated device.

24. The processing method according to claim 23, wherein the step S1000 comprises:
in response to information to be processed, outputting a first processing request to the first target application or target service, and/or the second target application or target service; and
receiving a first response result output by the first target application or target service, and/or receiving a second response result output by the second target application or target service.

25. The processing method according to claim 23, wherein the step S1000 comprises:
in response to information to be processed, outputting a first processing request so that the first target application or target service obtains a first response result based on the first processing request; and
in response to the at least one first response result not meeting a first preset condition, and/or a first operation meeting a second preset condition, and/or, the processing device meeting a third preset condition, outputting a second processing request, so that the second target application or target service obtains the second response result.

26. The processing method according to claim 23, wherein the step S1000 comprises:
in response to the at least one first response result not meeting a first preset condition, detecting whether the at least one second response result meets a second preset condition;
in response to the at least one second response result not meeting the second preset condition, outputting first prompt information, and/or proceeding to the step S2000; and/or
in response to the at least one second response result meeting the second preset condition, processing the second response result according to a preset processing strategy and outputting the second response result, or outputting the second response result according to an output strategy.

27. The processing method according to any one of claims 23 to 26, wherein before the step S2000, the method comprises:
determining at least one associated device according to the first response result and/or the second response result and/or information to be processed and/or operation information and/or a scene in which the processing device is located.

28. The processing method according to any one of claims 23 to 26, wherein in the step S2000, the third response result being obtained through processing the first response result and/or the second response result by the associated device comprises at least one of the following:
in response to the editing operation, the associated device obtains the third response result after processing the first response result and/or the second response result;
in response to the processing request, the associated device wakes up or runs a third target application or target service, and processes the first response result and/or the second response result to obtain the third response result; and
in response to the preset operation, the associated device outputs the first response result and/or the second response result to an intermediate device, and/or receives the third response result output by the intermediate device.

29. The processing method according to any one of claims 23 to 26, wherein the step S2000 comprises:
detecting whether the third response result meets a preset output condition;
in response to that the third response result meets the preset output condition, outputting the third response result; and/or
in response to that the third response result does not meet the preset output condition, preprocessing the third response result.

30. A device, **characterized by** comprising: a memory and a processor, wherein a processing program is stored on the memory, and when the processing program is executed by the processor, the steps of the processing method according to any one of claims 1 to 29 are implemented.

31. A readable storage medium, **characterized in that**, a computer program is stored on the readable storage medium, and when the computer program is executed by a processor, the steps of the processing method according to any one of claims 1 to 29 are implemented.
